# EUROPEAN PATENT APPLICATION

(11) **EP 4 568 294 A1**
(43) Date of publication of application: **11.06.2025**
(21) Application number: 23848927.2
(22) Date of filing: 23.04.2023
(51) Int. Cl.: H04W 4/02

(54) **COMMUNICATION METHOD AND DEVICE, AND STORAGE MEDIUM**

(30) Priority: 05.08.2022 CN 202210940004
(71) Applicant: Datang Mobile Communications Equipment Co., Ltd., Beijing 100085 (CN)
(72) Inventor: YANG, Meiying, Beijing 100085 (CN); WANG, Jiaqing, Beijing 100085 (CN); LUO, Chen, Beijing 100085 (CN); CHENG, Fang-Chen, Beijing 100085 (CN)
(74) Representative: Studio Torta S.p.A.
(86) International application number: PCT/CN2023/090112
(87) International publication number: WO 2024/027216

(57) **Abstract**

A communication method, apparatus and storage medium relate to the technical field of wireless communication. The method includes: receiving, by a terminal, first information sent by a network device, and performing first data transmission according to at least one of the N first transmission configuration parameters and a second transmission configuration parameter associated with the at least one first transmission configuration parameter. The first information includes updated N first transmission configuration parameters, and each of the N first transmission configuration parameters is associated with at least one second transmission configuration parameter, and the first transmission configuration parameter and the second transmission configuration parameter are CG configuration parameters or SPS configuration parameters.

## Description

### CROSS-REFERENCE TO RELATED APPLICATIONS

The present disclosure claims the priority of Chinese Patent Application No. 202210940004.2, filed on August 5, 2022, and titled "COMMUNICATION METHOD AND APPARATUS, AND STORAGE MEDIUM", the entire contents of which are incorporated into the present disclosure by reference.

### TECHNICAL FIELD

The present disclosure relates to the technical field of wireless communication, in particular to a communication method, an apparatus, and a storage medium.

### BACKGROUND

A XR service includes augmented reality (Augmented Reality, AR), virtual reality (Virtual Reality, VR), mixed reality (Mixed Reality, MR), configured grant (Configured Grant, CG, also known as configuration scheduling or configuration authorization) and so on, has a high requirement for latency, reliability and data transmission rate, and can be applied to medical care, education and learning industries, office scene meeting, tourism, military affair, stage effects, movies, shopping and many other fields.

Based on current study, a characteristic of the XR service includes: for downlink transmission and uplink transmission, a data packet size of the XR service is dynamic changing, which brings about great adjustment of the data packet in a short time. A requirement of the XR service transmission performance includes: simultaneously meeting low-latency, high speed transmission and high reliability.

How to schedule data transmission of a service (such as the XR service) with the above characteristic is a technical problem that needs to be solved at present.

### SUMMARY

The present disclosure provides a communication method, an apparatus, and a storage medium, to dynamically adjust a CG/SPS configuration parameter.

In a first aspect, a communication method is provided, the method includes:
receiving, by a terminal, first information sent by a network device, where the first information includes N first transmission configuration parameters, and the N is an integer greater than or equal to 1; where each of the N first transmission configuration parameters is associated with at least one second transmission configuration parameter, and the first transmission configuration parameter and the second transmission configuration parameter are configured grant (CG) configuration parameters or semi-persist scheduling (SPS) configuration parameters;
performing, by the terminal, first data transmission according to at least one of the N first transmission configuration parameters and a second transmission configuration parameter associated with the at least one first transmission configuration parameter.

Optionally, an association relationship between each of the N first transmission configuration parameters and the second transmission configuration parameter is pre-configured or predefined.

Optionally, the first information includes a first transmission configuration parameter, which is one of M first transmission configuration parameters reported by the terminal to the network device, and the M is an integer greater than or equal to the N; before the receiving, by a terminal, the first information sent by the network device, the method further includes: sending, by the terminal, the M first transmission configuration parameters and at least one second transmission configuration parameter associated with each of the M first transmission configuration parameters to the network device.

Optionally, the first transmission configuration parameter is time domain resource information, or frequency domain resource information, or time frequency resource information; where the time frequency resource information includes time domain resource information and frequency domain resource information.

Optionally, the at least one second transmission configuration parameter includes at least one of the following: a modulation code scheme (MCS), a redundancy version, a sending power parameter, time domain resource information, frequency domain resource information, time frequency resource information; where the time frequency resource information includes time domain resource information and frequency domain resource information.

Optionally, the time domain resource information includes at least one of the following:
a starting time domain position of the first data transmission;
a time offset relative to the starting time domain position;
a transmission time length of the first data transmission;
a transmission period.

Optionally, the time domain resource information is time domain resource information based on at least one of the following: a symbol, a slot, a subframe, and a wireless frame.

Optionally, the frequency domain resource information includes at least one of the following:
a starting frequency domain position of the first data transmission;
a frequency offset relative to the starting frequency domain position;
frequency domain resource occupied by the first data transmission.

Optionally, the frequency domain resource information is frequency domain resource information based on at least one of the following: a resource unit (RE), a resource block (RB), a resource block group (RBG), partial bandwidth (BWP), and a component carrier (CC).

Optionally, the first transmission configuration parameter is a first CG configuration parameter and the second transmission configuration parameter is a second CG configuration parameter; the performing, by the terminal, the first data transmission according to at least one of the N first transmission configuration parameters and the second transmission configuration parameter associated with the at least one first transmission configuration parameter includes: selecting, by the terminal, a target CG configuration parameter from the N first CG configuration parameters; acquiring, by the terminal, a second CG configuration parameter associated with the target CG configuration parameter according to the target CG configuration parameter; and sending, by the terminal, data to the network device according to the target CG configuration parameter and the second CG configuration parameter associated with the target CG configuration parameter.

Optionally, after the first data transmission, the method further includes: receiving, by the terminal, second information sent by the network device, where the second information includes at least one of the following:
first indication information is used to indicate whether the first CG configuration parameter and the second CG configuration parameter associated with the first CG configuration parameter that being used for the first data transmission are available or unavailable;
second indication information is used to indicate whether each of the N first CG configuration parameters and the second CG transmission configuration parameter associated with each of the N first CG configuration parameters that being used for the first data transmission are available or unavailable;
third indication information is used to indicate one or more CG configurations that need to be deleted or skipped in CG configurations used for the first data transmission.

Optionally, the first transmission configuration parameter is a first SPS configuration parameter and the second transmission configuration parameter is a second SPS configuration parameter; the performing, by the terminal, the first data transmission according to at least one of the N first transmission configuration parameters and the second transmission configuration parameter associated with the at least one first transmission configuration parameter includes: receiving, by the terminal, data sent by the network device according to the N first SPS configuration parameters and a second SPS configuration parameter associated with each first SPS configuration parameter.

Optionally, the first information further includes third information, which is used to indicate that at least one transmission configuration that needs to be skipped in transmission used for the first data transmission, and the transmission configuration includes a CG configuration or a SPS configuration; the method further includes: performing, by the terminal, the first data transmission without adopting the at least one transmission configuration that needs to be skipped, or without adopting the transmission configuration parameter in the at least one transmission configuration that needs to be skipped during the first data transmission.

Optionally, the third information includes: fourth indication information is used to indicate that the transmission configuration closest to first time in the transmission configurations used for the first data transmission needs to be skipped; or an index of the transmission configuration that needs to be skipped.

Optionally, the receiving, by a terminal, first information sent by a network device includes: receiving, by the terminal, downlink control indication DCI sent by the network device on a physical downlink control channel PDCCH, where the DCI includes the first information; or receiving, by the terminal, the first information sent by the network device on a physical downlink shared channel PDSCH; or receiving, by the terminal, a downlink reference signal sent by the network device, where the downlink reference signal carries the first information.

In a second aspect, a communication method is provided, the method includes:
sending, by a network device, first information to a terminal, where the first information includes N first transmission configuration parameters, and the N is an integer greater than or equal to 1; where each of the N first transmission configuration parameters is associated with at least one second transmission configuration parameter, and the first transmission configuration parameter and the second transmission configuration parameter are configured grant CG configuration parameters or semi-persist scheduling SPS configuration parameters;
at least one of the N first transmission configuration parameters and a second transmission configuration parameter associated with the at least one first transmission configuration parameter are used for first data transmission.

Optionally, an association relationship between each of the N first transmission configuration parameters and the second transmission configuration parameter is pre-configured or pre-defined.

Optionally, the first information includes a first transmission configuration parameter, which is one of M first transmission configuration parameters reported by the terminal to the network device, and the M is an integer greater than or equal to the N; before the sending, by the network device, the first information to the terminal, the method further includes: receiving, by the network device, the M first transmission configuration parameters and at least one second transmission configuration parameter associated with each of the M first transmission configuration parameters that being sent by the terminal.

Optionally, the first transmission configuration parameter is time domain resource information, or frequency domain resource information, or time frequency resource information; where the time frequency resource information includes time domain resource information and frequency domain resource information.

Optionally, the at least one second transmission configuration parameter includes at least one of the following: a modulation code scheme MCS, a redundancy version, a sending power parameter, time domain resource information, frequency domain resource information, time frequency resource information, where the time frequency resource information includes time domain resource information and frequency domain resource information.

Optionally, the time domain resource information includes at least one of the following:
a starting time domain position of the first data transmission;
a time offset relative to the starting time domain position;
a transmission time length of the first data transmission;
a transmission period.

Optionally, the time domain resource information is time domain resource information based on at least one of the following: a symbol, a slot, a subframe, and a wireless frame.

Optionally, the frequency domain resource information includes at least one of the following:
a starting frequency domain position of the first data transmission;
a frequency offset relative to the starting frequency domain position;
frequency domain resource occupied by the first data transmission.

Optionally, the frequency domain resource information is frequency domain resource information based on at least one of the following: RE, RB, RBG, BWP, CC.

Optionally, the first transmission configuration parameter is a first CG configuration parameter and the second transmission configuration parameter is a second CG configuration parameter; the method further includes: receiving, by the network device, the data sent by the terminal according to N first CG configuration parameters and a second CG configuration parameter associated with each the first CG configuration parameter, respectively.

Optionally, after the receiving, by the network device, the data sent by the terminal, the method further includes: sending, by the network device, second information to the terminal, where the second information includes at least one of the following:
first indication information is used to indicate whether the first CG configuration parameter and the second CG configuration parameter associated with the first CG configuration parameter that being used for the first data transmission are available or unavailable;
second indication information is used to indicate whether each of the N first CG configuration parameters and the second CG transmission configuration parameter associated with each of the N first CG configuration parameters that being used for the first data transmission are available or unavailable;
third indication information is used to indicate one or more CG configurations that need to be deleted or skipped in CG configurations used for the first data transmission.

Optionally, the first transmission configuration parameter is a first SPS configuration parameter and the second transmission configuration parameter is a second SPS configuration parameter; the method further includes: sending, by the network device, data to the terminal according to the N first SPS configuration parameters and a second SPS configuration parameter associated with each first SPS configuration parameter.

Optionally, the first information further includes third information, which is used to indicate that at least one transmission configuration that needs to be skipped in transmission configurations used for the first data transmission, and the transmission configuration includes a CG configuration or a SPS configuration.

Optionally, the third information includes: fourth indication information is used to indicate that the transmission configuration closest to first time in the transmission configurations used for the first data transmission needs to be skipped; or an index of the transmission configuration that needs to be skipped.

Optionally, the sending, by a network device, first information to a terminal includes: sending, by the network device, downlink control indication DCI to the terminal on a physical downlink control channel PDCCH, where the DCI includes the first information; or sending, by the network device, the first information to the terminal on a physical downlink shared channel PDSCH; or sending, by the network device, a downlink reference signal to the terminal, where the downlink reference signal carries the first information.

In a third aspect, a terminal is provided, which includes a processing unit and a transceiver unit. Where, the transceiver unit is configured to receive first information sent by a network device, where the first information includes N first transmission configuration parameters, and the N is an integer greater than or equal to 1. Where each of the N first transmission configuration parameters is associated with at least one second transmission configuration parameter, and the first transmission configuration parameter and the second transmission configuration parameter are configured grant CG configuration parameters or semi-persist scheduling SPS configuration parameters. The processing unit is configured to perform first data transmission according to at least one of the N first transmission configuration parameters and a second transmission configuration parameter associated with the at least one first transmission configuration parameter.

In a fourth aspect, a network device is provided, which includes a processing unit and a transceiver unit. Where the transceiver unit is configured to send first information to a terminal, where the first information includes N first transmission configuration parameters, and the N is an integer greater than or equal to 1. Where each of the N first transmission configuration parameters is associated with at least one second transmission configuration parameter, and the first transmission configuration parameter and the second transmission configuration parameter are configured grant CG configuration parameters or semi-persist scheduling SPS configuration parameters. Where at least one of the N first transmission configuration parameters and a second transmission configuration parameter associated with the at least one first transmission configuration parameter are used for first data transmission.

In a fifth aspect, a communication apparatus is provided, which includes a processor, a memory, and a transceiver. Where the transceiver receives and sends data under the control of the processor. The memory stores a computer instruction. The processor is configured to read the computer instruction and execute the method according to any one of the above first aspect.

In a sixth aspect, a communication apparatus is provided, which includes a processor, a memory, and a transceiver. Where the transceiver receives and sends data under the control of the processor. The memory stores a computer instruction. The processor is configured to read the computer instruction and execute the method according to any one of the above second aspect.

In a seventh aspect, a computer-readable storage medium storing a computer-executable instruction is provided, the computer-executable instruction is used to cause a computer to execute the method according to any one of the above first aspect or the above second aspect.

In an eighth aspect, a computer program product is provided, when called by a computer, the computer program product causes the computer to excute the method according to any one of the above first aspect or the above second aspect.

In the above embodiments of the present disclosure, the network device can send the first transmission configuration parameter in the transmission configurations (such as a CG configuration or a SPS configuration) to the terminal through the first information, so that the terminal can obtain at least one second transmission configuration parameter associated with the first transmission configuration parameter according to the first transmission configuration parameter, thereby the first data transmission can be performed according to the first transmission configuration parameter and the associated second transmission configuration parameter thereof, and then the transmission configuration parameter can be dynamically adjusted through the first information, and at the same time, the signaling overhead can also be saved.

An embodiment of the present disclosure further provides a communication method, an apparatus, and a storage medium, to simultaneously activate and deactivate a CG/SPS configuration through DCI.

In a ninth aspect, a communication method is provided, which includes: receiving, by a terminal, a first signaling sent by a network device, where the first signaling includes activation indication information and deactivation indication information, where the activation indication information is used to indicate the activation of at least one transmission configuration of semi-persist transmission, and the deactivation indication information is used to indicate the deactivation of at least one transmission configuration of semi-persist transmission.

Optionally, the method further includes performing, by the terminal, semi-persist data transmission according to the first signaling.

Optionally, the first signaling includes at least one of the following:
at least one identifier of deactivation semi-persist transmission;
at least one identifier of activation semi-persist transmission;
at least one identifier of activation semi-persist transmission and deactivation deactivating semi-persist transmission;
a transmission configuration parameter of activation semi-persist transmission.

Optionally, the first signaling is DCI scrambled based on configured CS-RNTI or DCI scrambled based on C-RNTI.

Optionally, the first signaling is DCI, and the DCI is an activation signaling or a deactivation signaling.

Optionally, the transmission configuration of the semi-persist transmission includes a configured grant CG configuration or a semi-persist scheduling SPS configuration.

In a tenth aspect, a communication method is provided, which includes: sending, by a network device, a first signaling to a terminal, where the first signaling includes activation indication information and deactivation indication information, where the activation indication information is used to indicate the activation of at least one transmission configuration of semi-persist transmission, and the deactivation indication information is used to indicate the deactivation of at least one transmission configuration of semi-persist transmission.

Optionally, the first signaling includes at least one of the following:
at least one identifier of deactivation semi-persist transmission;
at least one identifier of activation semi-persist transmission;
at least one identifier of activation semi-persist transmission and deactivation semi-persist transmission;
a transmission configuration parameter of activation semi-persist transmission.

Optionally, the first signaling is DCI scrambled based on configured CS-RNTI or DCI scrambled based on C-RNTI.

Optionally, the first signaling is DCI, and the DCI is an activation signaling or a deactivation signaling.

Optionally, the transmission configuration of the semi-persist transmission includes a CG configuration or a SPS configuration.

In an eleventh aspect, a terminal is provided, which includes a processing unit and a transceiver unit. Where the transceiver unit is configured to receive a first signaling sent by a network device, where the first signaling includes activation indication information and deactivation indication information, where the activation indication information is used to indicate the activation of at least one transmission configuration of semi-persist transmission, and the deactivation indication information is used to indicate the deactivation of at least one transmission configuration of semi-persist transmission.

In a twelfth aspect, a network device is provided, which includes a processing unit and a transceiver unit. Where the transceiver unit is configured to send a first signaling to a terminal, where the first signaling includes activation indication information and deactivation indication information, where the activation indication information is used to indicate the activation of at least one transmission configuration of semi-persist transmission, and the deactivation indication information is used to indicate the deactivation of at least one transmission configuration of semi-persist transmission.

In a thirteenth aspect, a communication apparatus is provided, which includes a processor, a memory, and a transceiver. The transceiver receives and sends data under the control of the processor; the memory stores a computer instruction. The processor is configured to read the computer instruction and execute the method according to any one of the above ninth aspect.

In a fourteenth aspect, a communication apparatus is provided, which includes a processor, a memory, and a transceiver. Where the transceiver receives and sends data under the control of the processor. The memory stores a computer instruction. The processor is configured to read the computer instruction and execute the method according to any one of the above tenth aspect.

In a fifteenth aspect, a computer-readable storage medium storing a computer-executable instruction is provided, the computer-executable instruction is used to cause a computer to execute the method according to any one of the above ninth aspect or the above tenth aspect.

In a sixteenth aspect, a computer program product is provided, when called by a computer, the computer program product causes the computer to execute the method according to any one of the above ninth aspect or the above tenth aspect.

In the-mentioned embodiment of the present disclosure, an activation signaling or a deactivation signaling is used to activate and deactivate synchronously transmission configurations, which can reduce the collision (especially a big data transmission) when data is transmitted based on multiple transmission configurations or multiple dynamic parameters in a transmission configuration, so that multiple transmission configurations of the semi-persist transmission or multiple dynamic parameters in a semi-persist transmission configuration can be activated and deactivated more quickly, thereby reducing conflicting semi-persist transmission.

### BRIEF DESCRIPTION OF DRAWINGS

In order to explain a technical solution of an embodiment of the present disclosure more clearly, the drawings required for use in the embodiment of the present disclosure will be briefly introduced below. It is evident that the drawings introduced below are only part of the embodiments of the present disclosure. For the ordinary skilled in the art, other drawings can be obtained according to these drawings without creative work.
FIG. 1a and FIG. 1b are schematic diagrams of distribution of XR service characteristics;
FIG. 2 is a schematic diagram of configuring multiple SPS transmission configurations to adapt to a XR service with changes in packet jitters and packet sizes;
FIG. 3 is a schematic diagram of activating a CG/SPS configuration through DCI;
FIG. 4 is a schematic diagram of a communication system architecture in an embodiment of the present disclosure;
FIG. 5 is a schematic flowchart of a communication method provided by an embodiment of the present disclosure;
FIG. 6 is a schematic flowchart of a communication method provided by another embodiment of the present disclosure;
FIG. 7 is a schematic flowchart of example 1 in an embodiment of the present disclosure;
FIG. 8 is a schematic diagram of different dynamic parameters associated with offsets at different starting positions in a CG configuration in an embodiment of the present disclosure;
FIG. 9 is a schematic diagram of different dynamic parameters associated with different periods in a CG configuration in an embodiment of the present disclosure;
FIG. 10 is a schematic flowchart of example 2 in an embodiment of the present disclosure;
FIG. 11 is a schematic diagram of different dynamic parameters associated with offsets at different starting frequency domain positions in a CG configuration in an embodiment of the present disclosure;
FIG. 12 is a schematic flowchart of example 3 in an embodiment of the present disclosure;
FIG. 13 is a schematic flowchart of example 4 in an embodiment of the present disclosure;
FIG. 14 is a schematic diagram of dynamic parameter configuration of semi-persist transmission scrambled based on CS-RNTI scrambling in an embodiment of the present disclosure;
FIG. 15 is a schematic flowchart of example 5 in an embodiment of the present disclosure;
FIG. 16 is a schematic diagram of semi-persist transmission scrambled based on C-RNTI skipping indication in an embodiment of the present disclosure;
FIG. 17 is a schematic structural diagram of a terminal provided by an embodiment of the present disclosure;
FIG. 18 is a schematic structural diagram of a network device provided by an embodiment of the present disclosure;
FIG. 19 is a schematic structural diagram of a communication apparatus provided by an embodiment of the present disclosure.

### DESCRIPTION OF EMBODIMENTS

In order to make the purposes, technical solutions, and advantages of the present disclosure clearer, the present disclosure will be further described in detail in conjunction with the accompanying drawings. It is evident that the described embodiments are only part of the embodiments of the present disclosure, but not all of them. Based on the embodiments in the present disclosure, all other embodiments obtained by the ordinary skilled in the art without creative work fall into the protection scope in the present disclosure.

In the following, some terms in the embodiments of the present disclosure are explained for the convenience of those skilled in the art to understand.
(1) in an embodiment of the present disclosure, the terms "network" and "system" are often used interchangeably, but those skilled in the art can understand their meanings.
(2) in an embodiment of the present disclosure, the term "multiple" refers to two or more, and other quantifiers are similar.
(3) "and/or", which describes an relationship of related objects, indicates that there can be three kinds of relationships, for example, A and/or B, which can indicate that A exists alone, A and B exist at the same time, and B exists alone. The character "/"generally indicates that the related objects are in an "or" relationship.
(4) in some embodiments of the present disclosure, "CG/SPS configuration" is used to indicate CG configuration or semi-persist scheduling (Semi-Persist Scheduling, SPS) configuration. In an embodiment of the present disclosure, a CG semi-persist transmission configuration can be a CG configuration or a SPS configuration. The CG configuration is uesed for uplink transmission and the SPS configuration is used for downlink transmission. For a CG configuration, an index can be used for an unique identifier. For a SPS configuration, an index can be used for an unique identifier.

A CG configuration may include one or more parameters (or known as CG configuration parameters or dynamic parameters). For example, it may include a CG transmission period, time frequency resource, a modulation code scheme (Modulation Code Scheme, MCS), a time domain offset, a frequency domain offset, etc.

A SPS configuration can include one or more parameters (or known as SPS configuration parameters or dynamic parameters). For example, it can include a SPS transmission period, time frequency resource, MCS, a time domain offset, a frequency domain offset, etc.

At present, for the transmission requirement of low-latency and high reliability, CG technology can effectively reduce transmission latency, but there is still room for improvement.

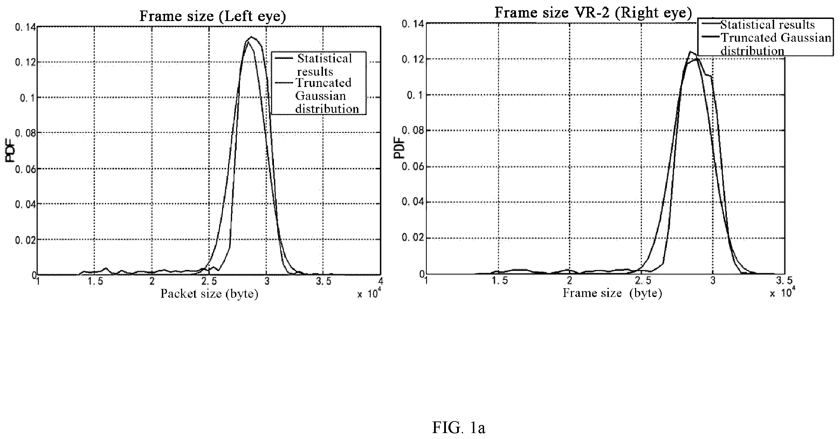

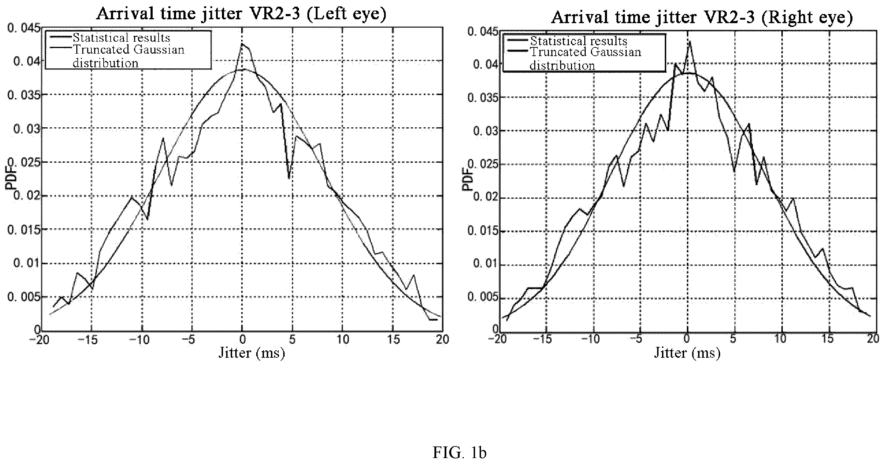

For a downstream data stream of a XR service, a truncated Gaussian distribution can be adopted to indicate a jitter (jitter) and a data packet size, and for AR, a modeling mode for an upstream single video stream is the same as that for the size and jitter of the data packet of a downstream single video stream. Take FIG. 1a and FIG. 1b as examples, FIG. 1a is a schematic diagram of service distribution of a XR data packet, and FIG. 1b is a schematic diagram of jitter distribution of a XR data packet. Where, the horizontal coordinate is the data packet size and the jitter size, and the vertical coordinate is the probability statistics. It can be seen that, compared with the typical small data packet transmission of ultra-reliable low-latency communications (ultra-Reliable Low-Latency Communications, uRLLC), the data packet size and arrival time interval of the XR service have different characteristics, so it is necessary to dynamically adjust the data transmission parameter to match the impact caused by the XR's data packet size changes and jitters.

At present, there are two types of uplink configured grant transmission schemes: Type 1 and Type 2.

In Type 1, a transmission parameter of a physical uplink shared channel (Physical Uplink Shared Channel, PUSCH) is configured by radio resource configuration (Radio Resource Configuration, RRC), and periodic PUSCH transmission opportunities can be determined according to the configuration information. When new data arrives in the terminal uplink, PUSCH transmission can be directly performed on the closest transmission opportunity.

In Type2, the transmission parameter of PUSCH is jointly configured by RRC and a physical downlink control channel (Physical Downlink Control Channel, PDCCH). The RRC configures parameters such as a period and an offset, a data rate related parameter (such as MCS), time frequency resource, etc., and a PDCCH activation signaling informs the configured Type 2 to activate and indicates scheduling information at the same time. Only after receiving the activation signaling, the terminal can adopt the corresponding PUSCH resource for uplink configured grant transmission. If the Type 2 PUSCH resource is released, it can be achieved by sending a PDCCH deactivation signaling.

For the XR service, different data packet sizes and network congestion conditions will lead to different degrees of latency jitter (Jitter) in the arrival of a service source data packet, and this latency jitter has certain randomness. At present, in CG technology and SPS technology, the updating of the dynamic parameter such as MCS with low-latency, high reliability and a high data transmission rate is configured by a RRC signaling, which makes the XR service unable to adapt to the change of its data packet size.

In order to overcome a problem of packet arrival randomness caused by the jitter, a possible solution is to configure multiple configured grant semi-persist transmission configurations (hereinafter referred to as CG/SPS configurations).

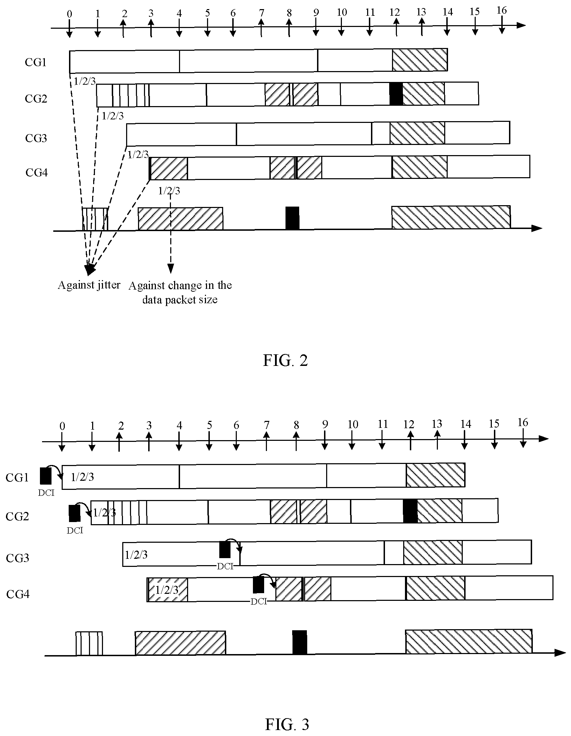

It is not applicable to the XR service by configuring multiple the CG/SPS configurations, the main reason is that:
(1) Multiple the CG/SPS configurations support a problem of changes in the packet jitter and the packet size of the XR service, and there may be a problem of the transmission configuration being insufficient, such as:
   in order to match the variation range of packet jitter of the XR service [-4ms, +4ms], in combination of the requirement of the latency, it considers configuring multiple CG/SPS configurations to match the possible packet jitter changes. As shown in FIG. 2, in which different filled squares indicate different data packets. For example, a CG/SPS configuration can be considered for each slot. In order to further match the change of the service, the MCS or time frequency resource of the CG/SPS configuration are adjusted in the configuration of each packet jitter, for example, three more CG/SPS configurations are configured. At this time, the total number of CG/SPS configurations required is 8*3=24. The maximum number of configurations supported by CG/SPS is 12, including CG configuration of Type 1. Furthermore, an index (index) of the CG/SPS configuration is indicated by 4 bits of hybrid automatic repeat request (Hybrid Automatic Repeat request, HARQ), so it cannot support enough CG/SPS configurations at this time.
(2) Problems of the latency and signaling overhead of activation/deactivation of multiple CG/SPS configurations.

In the existing protocols, for the activation of CG/SPS, only a CG/SPS configuration can be activated by a downlink control indication (Downlink Control Indication, DCI). If multiple CG/SPS configurations need to be activated, multiple DCI indications are required, which leads to more latency and signaling overhead.

As shown in FIG. 3, when DCI carries the activation signaling, one DCI can only activate one CG/SPS configuration at one time. When multiple CG/SPS propagation configurations need to be activated, multiple DCI need to be sent. If one activated DCI is sent per slot, activation time of the multiple CG/SPS configurations is longer. If multiple activated DCI are sent per slot, the activation time of the multiple CG/SPS configurations can be partially reduced, but blind detection of multiple DCI for activating the CG/SPS configurations in one slot will increase the overhead of the terminal to some extent.

(3) A flexibility problem of reactivating the CG/SPS configuration.

The reactivation of the CG/SPS configuration only includes the reactivation of the parameter part indicated by DCI. Parameters such as a period, MCS and time frequency resource etc. cannot be reactivated by the DCI, but it is very necessary to dynamically adjust parameters such as a period, MCS and time frequency resource etc. to match the packet size and packet jitter of the XR service.

For a semi-persist transmission CG/SPS configuration, due to the change in data packet sizes during the data transmission period of each XR service, and sizes differences are larger, it is difficult to match this dynamic change within the time transmission range of a CG/SPS configuration, which makes it more urgent to dynamically adjust the parameters of CG/SPS to match the dynamic change of the data packet size of the XR service in the CG/SPS configuration.

Based on one or more of the above problems, an embodiment of the present disclosure provides a communication method and an apparatus thereof.

In some embodiments of the present disclosure, the dynamic parameter in the CG/SPS configuration is changed by combining an explicit indication mode with an implicit indication mode, so as to dynamically adjust the data transmission, which can make the data transmission more match the variable data packet size of the XR service and reduce conflict and collision of terminals/services.

The changing the dynamic parameter in the CG/SPS configuration refers to adjust an internal parameter of the CG/SPS configuration without changing a CG/SPS index (index), for example, a parameter related to data transmission rate, more specifically, it may include MCS, a time frequency resource, a CG/SPS transmission period, etc.

In other embodiments of the present disclosure, the activation of one or more CG/SPS configurations and the deactivation of another one or more CG/SPS configurations are implemented by a signaling (such as DCI) to save signaling overhead.

An embodiment of that present disclosure will be described in detail with reference to an accompany drawing.

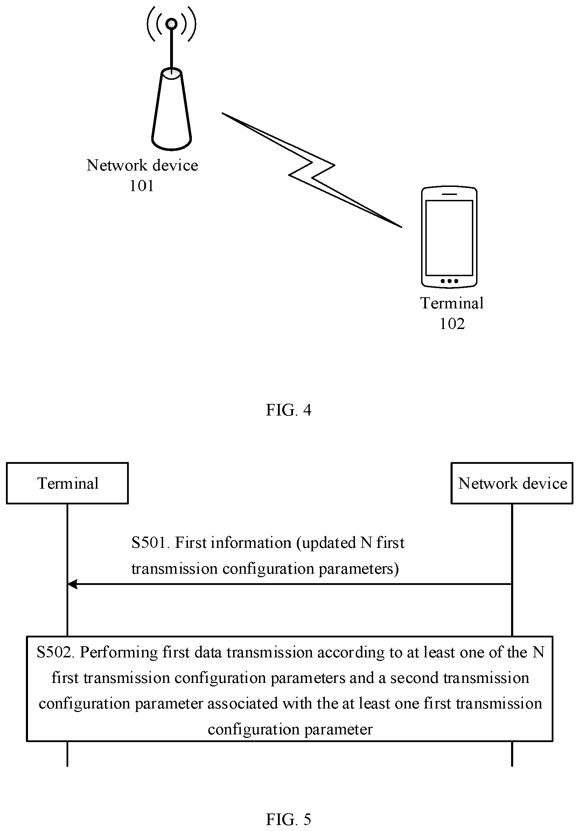

FIG. 4 exemplarily shows a network system architecture applicable to an embodiment of the present disclosure. The communication system shown in FIG. 4 includes a network device 101 and a terminal 102. The network device 101 can send information related to transmission scheduling to the terminal 102, and the terminal 102 can transmit data according to the received information related to transmission scheduling.

The network device 101 is a device that provides wireless communication function for the terminal, and is used to receive an uplink signal from the terminal 102 or send a downlink signal to the terminal 102. The network device 101 includes, but is not limited to, gNB in 5G, a radio network controller (Radio Network Controller, RNC), Node B (Node B, NB), a base station controller (Base Station Controller, BSC), a base transceiver station (Base Transceiver Station, BTS), a home base station (e.g., Home evolved NodeB, or Home Node B, HNB), a baseband unit (BaseBand Unit, BBU), a transmitting and receiving Point (Transmitting and Receiving Point, TRP), a transmitting point (Transmitting Point, TP), a mobile switching center, etc. The base station in the present disclosure can also be a device that provides wireless communication function for the terminal in other communication systems that may appear in the future.

The terminal 102 is an entity on a user side for receiving or transmitting a signal, and is used to send an uplink signal to the network device or receive a downlink signal from the network device. A terminal can also be called UE (User Equipment). The terminal 102 is a device that may provide a user with voice and/or data connectivity. For example, the terminal may include a handheld device with a wireless connection function, a vehicle-mounted device, and the like. At present, the terminal can be a mobile phone (Mobile Phone), a tablet computer, a notebook computer, a palmtop computer, a mobile internet device (Mobile Internet Device, MID), a wearable device, a virtual reality (Virtual Reality, VR) device, a augmented reality (Augmented Reality, AR) device, a wireless terminal in industrial control (Industrial Control), a wireless terminal in self-driving (Self-Driving), a wireless terminal in a smart grid (Smart Grid), a wireless terminal in transportation safety (Transportation Safety), a wireless terminal in a smart city (Smart City), or a wireless terminal in smart home (Smart Home), etc.

FIG. 4 is only an example, and does not constitute a limitation on the type of the communication system and the number, types, etc. of devices included in the communication system. A network architecture and a service scenario described in an embodiment of the present disclosure are for the purpose of explaining a technical solution of an embodiment of the present disclosure, and do not constitute a limitation on the technical solution provided by the embodiment of the present disclosure. The ordinary skilled in the art can know that with evolution of the network architecture and emergence of a new service scenario, the technical solution provided by the embodiment of the present disclosure is also applicable to a similar technical problem.

Refer to FIG. 5, which is a schematic flowchart of a communication method provided by an embodiment of the present disclosure. As shown in the figure, the process may include the following steps:
S501: sending, by a network device, first information to a terminal.

The first information includes N first transmission configuration parameters, and the N is an integer greater than or equal to 1. Where, each of the N first transmission configuration parameters is associated with at least one second transmission configuration parameter. Hereinafter in the present disclosure, "N first transmission configuration parameters" indicates N first transmission configuration parameters in a certain transmission configuration. Taking a first CG configuration as an example, a value of the time domain offset in an initial first CG configuration is 2 subframes, and the value of the time domain offset included in the first information is 3 subframes, that is, the value of the time domain offset with 3 subframes is an updated time domain offset parameter in the first CG configuration.

In some scenarios, the N first transmission configuration parameters are updated first transmission configuration parameters. That is, the network device can update the values of some transmission configuration parameters through the first information.

In a possible implementation, the first transmission configuration parameter and the second transmission configuration parameter are CG configuration parameters. For example, the first transmission configuration parameter and the second transmission configuration parameter are different parameters in the same CG configuration. In another possible implementation, the first transmission configuration parameter and the second transmission configuration parameter are SPS configuration parameters. For example, the first transmission configuration parameter and the second transmission configuration parameter are different parameters in the same SPS configuration.

Optionally, the first transmission configuration parameter may include one parameter or a plurality of parameters.

In a possible implementation, the first transmission configuration parameter may include one parameter or a plurality of parameters. The first transmission configuration parameter is time domain resource information, or frequency domain resource information, or time frequency resource information. Where, the time frequency resource information includes time domain resource information and frequency domain resource information.

Optionally, when the first transmission configuration parameter is frequency domain resource information, the time domain resource information may include at least one of the following:
a starting time domain position of first data transmission.

The first data transmission may refer to uplink transmission or downlink transmission between the terminal and the network device. If the first transmission configuration parameter and the second transmission configuration parameter are CG configuration parameters, the first data transmission is uplink transmission. Optionally, the uplink transmission may include one or more CG occations (CG occation), in a time domain window of the one or more CG occations the terminal sends data to the network device. If the first transmission configuration parameter and the second transmission configuration parameter are SPS configuration parameters, the first data transmission is downlink transmission. Optionally, the downlink transmission may include one or more SPS occations (SPS occation), in the time domain window of the one or more SPS occations, the network device sends data to the terminal.

For the first data transmission, the starting time domain position indicates that the first data transmission is started at the time domain starting position. For example, for uplink transmission, the time domain starting position can be the starting position of the time domain window corresponding to one or more CG occations, and for downlink data transmission, the starting time domain position can be the starting position of the time domain window corresponding to one or more SPS occations.

Optionally, the above time domain resource information (i.e., the starting time domain position) may be time domain resource information based on at least one of the following: a symbol, a slot, a subframe, and a wireless frame. For example, the above starting time domain position may be a frame number of a starting wireless frame, or a frame number of a starting subframe, or an index of a starting slot, or an index of a starting symbol. The above starting time domain position can also be a combination of the above information. For example, the above starting time domain position can be a frame number of a wireless frame and a subframe number within the wireless frame (indicating that the starting time domain position is the subframe in the wireless frame), or a frame number of a wireless frame and an index of symbols within the wireless frame, etc. By analogy, it may also include other combinations, which are not listed here.

For a time offset relative to the starting time domain position of the first data transmission, according to the time offset, the first data transmission can be started between the terminal and the network device after delaying the time offset based on starting time domain position of the first data transmission being a starting point.

Optionally, the above time domain resource information (i.e., the time offset) may be time domain resource information based on at least one of the following: a symbol, a slot, a subframe, and a wireless frame. For example, the time offset can be a symbol offset (such as the number of offset symbols), or a slot offset (such as the number of offset slots), or a subframe offset (such as the number of offset subframes), or a wireless frame offset (such as the number of offset wireless frames). The position of the above time offset can also be a combination of the above information. For example, the above time offset can be a subframe offset and a symbol offset, indicating that a total time offset is the subframe offset plus the symbol offset. By analogy, it may also include other combinations, which are not listed here.

### A Transmission time length of the first data transmission.

Optionally, the above time domain resource information (i.e., the transmission time length) may be time domain resource information based on at least one of the following: a symbol, a slot, a subframe, and a wireless frame. For example, the transmission time length can be indicated by the number of the symbol, or by the number of the slot, or by the number of the subframe, or by the wireless frame.

### A transmission period.

Optionally, the above time domain resource information (i.e., the transmission period) may be time domain resource information based on at least one of the following: a symbol, a slot, a subframe, and a wireless frame. For example, the above transmission period can be indicated by the number of the symbol, or by the number of the slot, or by the number of the subframe, or by the number of the wireless frame.

Of course, the above time domain resource information can also be time domain resource information based on other time units, and this is not limited by embodiments of the present disclosure.

Optionally, when the first transmission configuration parameter is frequency domain resource information, the frequency domain resource information may include at least one of the following:
a starting frequency domain position of first data transmission.

Optionally, the above time domain resource information (i.e., the starting frequency domain position) may be frequency domain resource information based on at least one of the following: a resource element (Resource Element, RE), a resource block (Resource Block, RB), a resource block group (Resource Block Group, RBG), a bandwidth part (Bandwidth Part, BWP), a component carrier (Component Carrier, CC), etc. For example, the above starting frequency domain position may be an index of starting RE, or an index of starting RB, or an index of starting RBG, or an index of starting BWP, or an index of a starting carrier (e.g., a subcarrier or a component carrier). The above starting frequency domain position can also be a combination of the above information. For example, the above starting frequency domain position can be an index of RB and an index of RE, which indicates that the starting frequency domain position is the RE in the RB. By analogy, it may also include other combinations, which are not listed here.

For a Frequency offset relative to the starting frequency domain position, according to the frequency offset, the first data transmission can be started between a terminal and a network device based on the starting frequency position of the first data transmission being a starting point, and at the position after performing an offset according to the frequency offset.

Optionally, the above frequency domain resource information (i.e., the frequency offset) may be frequency resource information based on at least one of the following: RE, RB, RBG, BWP, CC, etc. For example, the above frequency offset can be a RE offset (such as the number of RE), a RB offset (such as the number of RB), a RGB offset (such as the number of RGB), a BWP offset (such as the number of BWP) or a CC offset (such as the number of CC). The above frequency offset position can also be a combination of the above information. For example, the above frequency offset can be the number of RB and the number of RE, which indicates that the total frequency offsets are the number of RB plus the number of RE. By analogy, it may also include other combinations, which are not listed here.

### A frequency domain resource occupied by the first data transmission.

The frequency domain resource occupied by the first data transmission may be the total (all) frequency domain resources occupied by the first data transmission.

Optionally, the above frequency domain resource information (i.e., the occupied frequency domain resource) may be frequency resource information based on at least one of the following: RE, RB, RBG, BWP, CC, etc. For example, the above total frequency domain resource can be the number of RE, or the number of RB, or the number of RGB, or the number of BWP or the number of CC. The frequency resource mentioned above can also be a combination of the above information. For example, the above frequency offset can be the number of RB and the number of RE, indicating that the total frequency domain resources are the number of RB plus the number of RE. By analogy, it may also include other combinations, which are not listed here.

Of course, the above frequency domain resource information can also be frequency domain resource information based on other frequency units, and this is not limited by embodiments of the present disclosure.

In a possible implementation, the at least one second transmission configuration parameter includes at least one of the following: MCS, a redundancy version (Redundancy Version, RV), a sending power parameter, time domain resource information, frequency domain resource information, time frequency resource information. Where, the time frequency resource information includes time domain resource information and frequency domain resource information.

Optionally, the MCS may further include: a MCS index (MCS index) and MCS adjustment amount (delta MCS).

Optionally, the time domain resource information includes at least one of the following:
a starting time domain position of the first data transmission;
a time offset relative to the starting time domain position;
a transmission time length of the first data transmission;
a transmission period.

Optionally, the time domain resource information is time domain resource information based on at least one of the following: a symbol, a slot, a subframe, and a wireless frame.

Optionally, the frequency domain resource information includes at least one of the following:
the starting frequency domain position of the first data transmission;
the frequency offset relative to the starting frequency domain position;
the frequency domain resource occupied by the first data transmission.

Optionally, the frequency domain resource information is frequency domain resource information based on at least one of the following: RE, RB, RBG, BWP, CC.

Examples of several first transmission configuration parameters and their associated second transmission configuration parameters are exemplary shown below.

### Example 1

The first transmission configuration parameter includes: time offset offset1, time offset offset2, time offset offset3.

The second transmission configuration parameter includes: parameters such as a transmission period associated with the time offset offset1, MCS and the like, parameters such as a transmission period associated with time offset offset2, MCS, a RV version, a sending power, a time frequency resource and the like, and parameters such as a transmission period associated with time offset offset3, MCS, a RV version, a sending power. a time frequency resource and the like.

### Example 2

The first transmission configuration parameter includes: a transmission period 1, a transmission period 2 and a transmission period 3.

The second transmission configuration parameter includes: parameters such as the time offset offset1 associated with the transmission period 1, MCS and the like, parameters such as the time offset offset2 associated with transmission period 2, MCS, a RV version, a sending power, a time frequency resource and the like, and parameters such as the time offset offset3 associated with transmission period 3, MCS, a RV version, a sending power, a time frequency resource and the like.

In a possible implementation, in the above S501, the terminal receives DCI sent by the network device on the physical downlink control channel (Physical Downlink Control Channel, PDCCH), and the DCI includes the first information. Optionally, the DCI can be the DCI of the activated transmission configuration (such as CG configuration or SPS configuration), that is, the first information (such as the first transmission configuration parameter) can be sent to the terminal through the DCI of the activated transmission configuration. In another possible implementation, in the above S501, the terminal receives the first information sent by the network device on a physical downlink shared channel (Physical Downlink Shared Channel, PDSCH), that is, the first information (such as the first transmission configuration parameter) can be sent to the terminal through the PDSCH. In another possible implementation, in the above S501, the terminal receives a downlink reference signal sent by the network device, and the downlink reference signal carries the first information, that is, the first information (such as the first transmission configuration parameter) can be sent to the terminal through the downlink reference signal. Optionally, the reference signal may include a channel state information-reference signal (Channel State Information-Reference Signal, CSI-RS), a timing reference signal (Timing Reference Signal, TRS), a synchronization signal block (Synchronization Signal Block, SSB), a positioning reference signal, etc., which is not limited by embodiments of the present disclosure.

Taking sending the above first CG configuration parameter through DCI as an example, the network device can indicate the CG configuration parameter (i.e., the dynamic parameter) at a CG transmission position to the terminal through DCI. For example, the network device can send the DCI before the configured CG transmission position to indicate the CG dynamic parameter (such as the above-mentioned first CG configuration parameter) at this CG transmission position. Optionally, if the terminal does not detect the DCI at the CG transmission position, the uplink data transmission is performed by adopting the CG dynamic parameter at the initial CG transmission position. Optionally, the DCI can carry an index of the CG configuration.

Taking sending the above-mentioned first SPS configuration parameter through DCI as an example, the network device can indicate the SPS configuration parameter (that is, the dynamic parameter) at a SPS transmission position to the terminal through DCI. For example, the network device may send DCI before the configured SPS transmission position to indicate the SPS dynamic parameter (such as the above-mentioned first SPS configuration parameter) at this SPS transmission position. Optionally, if the terminal does not detect the DCI at the SPS transmission position, the uplink data transmission is performed by adopting the SPS dynamic parameter at the initial SPS transmission position. Optionally, the DCI may carry an index of the SPS configuration.

In a possible implementation, an association relationship between each of the above N first transmission configuration parameters and the second transmission configuration parameter may be pre-configured or pre-defined. For example, the association relationship between each of the N first transmission configuration parameters and the second transmission configuration parameter can be pre-configured in the terminal and the network device; or the association relationship between each of the N first transmission configuration parameters and the second transmission configuration parameter can be defined in a protocol.

Optionally, the association relationship between the above first transmission configuration parameter and the second transmission configuration parameter can be configured through a RRC signaling.

Through the above implementations, the network device can select the first transmission configuration parameter matching with a current service demand according to the pre-configured or pre-defined association relationship and further according to a service characteristic demand, and send it to the terminal through the first information, to adapt the data transmission between the network device and the terminal with the current service demand.

In another possible implementation, the association relationship between each of the above N first transmission configuration parameters and the second transmission configuration parameter is reported by the terminal to the network device. For example, the first information includes one first transmission configuration parameter, which is one of M first transmission configuration parameters reported by the terminal to the network device, and the M is an integer greater than or equal to the N. For example, before receiving the first information sent by the network device, the terminal sends M first transmission configuration parameters and at least one second transmission configuration parameter associated with each of the M first transmission configuration parameters to the network device. Optionally, the M first transmission configuration parameters are the first transmission configuration parameter expected by the terminal. Accordingly, the network device can select N first transmission configuration parameters from the above M first transmission configuration parameters (such as according to the channel state, etc.) and send them to the terminal. That is, the network device can confirm one or more groups of the N groups of transmission configuration parameters, where one group of transmission configuration parameters can include a first transmission configuration parameter and at least one second transmission configuration parameter associated with it.

Optionally, the terminal may determine the M first transmission configuration parameters expected by the terminal and at least one second transmission configuration parameter associated with each of the M first transmission configuration parameters according to the channel state. Optionally, the terminal can determine the channel state through the reciprocity of the uplink channel and the downlink channel, for example, the transmission configuration parameter (including the first transmission configuration parameter and the second transmission configuration parameter) expected by the terminal can be determined in the following modes:
mode 1: the state of the uplink channel can be acquired through a downlink reference signal, so that parameters such as MCS, etc. can be obtained by estimating;
mode 2: parameters such as uplink MCS, etc. are acquired through a MCS parameter of the PDSCH scheduled by the DCI.

Optionally, the terminal can report the above parameters to the network device through an uplink signal. Optionally, the uplink signal may include at least one of the following: an uplink scheduling request (Scheduling Request, SR) signal, a wake-up signal (Wake-Up Signal, WUS), a random-access channel (Radom Access Channel, RACH) preamble (preamble) signal, a sounding reference signal (Sounding Reference Signal, SRS), a physical uplink shared channel (Physical Uplink Shared Channel, PUSCH) signal, and a physical uplink control channel (Physical Uplink Control Channel, PUCCH) signal. Optionally, when the above transmission configuration parameter is carried in the PUSCH to send, they can be reported through a media access control-control element (Media Access Control-Control Element, MAC-CE), which is not limited by embodiments of the present disclosure.

Through the above implementations, the terminal can dynamically report the transmission configuration parameter through the uplink signal, so that the network can timely update the transmission configuration parameter of the terminal through the first information according to the transmission configuration parameter expected by a terminal side, to adapt to the needs of the terminal for data transmission or to adapt to the service characteristics.

S502: performing, by the terminal, first data transmission according to at least one of the N first transmission configuration parameters and a second transmission configuration parameter associated with the at least one first transmission configuration parameter. That is, the terminal can apply at least one of the above N first transmission configuration parameters and the second transmission configuration parameter associated with the at least one first transmission configuration parameter to (or for) first data transmission.

If the first transmission configuration parameter and the second transmission configuration parameter are SPS configuration parameters (specifically, the first transmission configuration parameter is a first SPS configuration parameter and the second transmission configuration parameter is a second SPS configuration parameter), the first data transmission is downlink data transmission. In S502, on the network device side, the network device can select a target SPS configuration parameter from the N first SPS configuration parameters (such as selecting according to the BSR reported by the terminal, or selecting according to the channel state and other factors), and send data to the terminal based on corresponding resource according to an association of the selected target SPS configuration parameter and the second SPS configuration parameter associated with the target SPS configuration parameter; on the terminal side, the terminal receives the data sent by the network device based on the corresponding resource according to the N first SPS configuration parameters and a second SPS configuration parameter associated with each first SPS configuration parameter.

In a possible implementation, if the first transmission configuration parameter and the second transmission configuration parameter are CG configuration parameters (specifically, the first transmission configuration parameter is the first CG configuration parameter and the second transmission parameter is the second CG configuration parameter), the first data transmission is uplink data transmission. In S502, on the terminal side, the terminal selects a target CG configuration parameter from the N first CG configuration parameters, acquires the second CG configuration parameter associated with the target CG configuration parameter according to the target CG configuration parameter, and then sends data to the network device according to the target CG configuration parameter and the second CG configuration parameter associated with the target CG configuration parameter. Optionally, the terminal can select a target CG configuration parameter from the N first CG configuration parameters according to a current channel state, a transport block (Transport Block, TB) size, a buffer state, a transmission requirement, and other factors. Optionally, the terminal can send data to the network device through the PUSCH.

Accordingly, on the network device side, the network device can receive the data sent by the terminal based on the corresponding resource according to the above N first CG configuration parameters and the second CG configuration parameters associated with each first CG configuration parameter. That is, the network device can reserve a plurality of resources according to the N first CG configuration parameters and the plurality of resources corresponding to the associated second CG configuration parameter thereof, and perform blind detection and reception on the data sent by the terminal on the reserved resources.

Optionally, the terminal may send a buffer stage report (Buffer Stage Report, BSR) to the network device. In this way, before the network device sends the first information to the terminal, the TB size of the terminal can be determined according to the BSR reported by the terminal, so that in S502, a first CG configuration parameter can be selected from the N first CG configuration parameters according to the TB size of the terminal, and the data sent by the terminal can be received according to the first CG configuration parameter and the associated second CG configuration parameter thereof, so that it is unnecessary to reserve resources according to the N first CG configuration parameters and a plurality of resources corresponding to the associated second CG configuration parameter thereof, thereby the resource utilization rate can be improved.

It can be seen from the above process that the network device can send the first transmission configuration parameter in the transmission configurations (such as the CG configuration or the SPS configuration) to the terminal through the first information, so that the terminal can obtain at least one second transmission configuration parameter associated with the first transmission configuration parameter according to the first transmission configuration parameter, thereby applying the first transmission configuration parameter and the associated second transmission configuration parameter thereof to the first data transmission, and further dynamically adjusting the transmission configuration parameter through the first information, and saving signaling overhead at the same time.

In some of the above embodiments of the present disclosure, the dynamic parameter or the CG/SPS configuration in the CG configuration or SPS configuration are changed (such as skipping or deleting CG/SPS configuration) by combining an explicit instruction (that is, indicating the first transmission configuration parameter) with an implicit instruction (that is, determining the second transmission configuration parameter associated with the first transmission configuration parameter according to the first transmission configuration parameter), so as to adjust the data transmission rate, thereby making the data transmission more match the service characteristics of the XR service with variable data packet size, and reducing the conflict and collision of terminals/services.

In a possible implementation, after S502, the method further includes the following steps:
S503: sending, by the network device, second information to the terminal.

Optionally, when the first transmission is an uplink transmission, the second information is feedback information of the network device for the first data transmission. The feedback information can be used for conflict resolution.

Optionally, the second information may include at least one of the following:
first indication information is used to indicate whether the first CG configuration parameter sent by the network device and the corresponding second CG transmission configuration parameter thereof are available or unavailable, and the first CG configuration parameter belongs to the first CG configuration. Optionally, the first indication information is 1-bit information.

For example, for example, the first information sent by the network device to the terminal includes a first CG transmission configuration parameter (such as a time domain offset) in a first CG configuration. In this case, the network device can generate first indication information according to a data reception situation of the terminal and send the first indication information to the terminal, to indicate whether the first CG transmission configuration parameter (such as time domain offset) in the first CG configuration and the corresponding second CG configuration parameter thereof are available. For example, if the network device receives the data sent by the terminal according to the resources corresponding to the first CG transmission configuration parameter and the corresponding second CG transmission configuration parameter thereof, the value of the generated instruction information is 0, indicating that it is available; otherwise, the value of the generated instruction information is 1, indicating that it is unavailable; or vice versa.

Second indication information is used to indicate whether each of the N first CG configuration parameters and the corresponding second CG configuration parameters thereof are available, and the N first CG configuration parameters belong to the same CG configuration. Optionally, the second indication information is N-bits information, where each bit corresponds to one of the N first transmission configuration parameters.

For example, the first information sent by the network device to the terminal includes N first CG transmission configuration parameters in a first CG configuration. In this case, the network device can generate second indication information according to the data reception situation of the terminal and send the second indication information to the terminal to indicate whether the N first CG transmission configuration parameters in the first CG configuration and the corresponding second CG configuration parameters thereof are available. For example, if the network device receives the data sent by the terminal according to the resources corresponding to a certain first CG transmission configuration parameter and the corresponding second CG transmission configuration parameter thereof, N-bits information is generated, and the bit corresponding to the first CG transmission configuration parameter is set to 0, indicating that the corresponding first CG transmission configuration parameter and second CG transmission configuration parameter are available, and other bits are set to 1; or vice versa.

Third indication information is used to indicate one or more CG configurations that need to be deleted or skipped. For example, the third indication information may be indexes of the one or more CG configurations that need to be deleted or skipped. Optionally, the third indication information may be multi-bits indication information.

For example, based on a situation of the first data transmission (that is, a reception situation of the data sent by the terminal), the network device can determine that there are many data transmission collision situations in the time frequency resource corresponding to one or more CG configurations applied to the first data transmission, and can further determine to skip or delete one or more of the CG configurations to reduce or avoid the occurrence of a collision. For example, if the network device determines that there are many collisions on the time frequency resource corresponding to the first CG configuration and the second CG configuration, it can determine to delete or skip one of the CG configurations (such as deleting or skipping the second CG configuration).

The skipping a CG configuration indicates that the first CG configuration is not adopted or the transmission configuration parameter in the first CG configuration is not adopted in this first data transmission process (the initial transmission configuration parameter in the first CG configuration can be adopted, and the initial transmission configuration parameter may refer to the CG configuration parameter configured through a RRC signaling).

In a possible implementation, the first information sent by the network device further includes third information, which is used to indicate one or more transmission configurations that need to be skipped in the transmission configurations used for the first data transmission. Where, the transmission configuration includes a CG configuration or a SPS configuration. Accordingly, on the terminal side, the terminal may not adopt the corresponding transmission configuration parameter(s) in one or more transmission configurations in the first data transmission process or not adopt the corresponding transmission configuration parameter(s) in one or more transmission configurations in the first data transmission process according to the third information (the initial transmission configuration parameter in the one or more transmission configurations may be adopted, which may refer to the transmission configuration parameter configured through a RRC signaling).

Optionally, on the network side, according to the reception situation of the data sent by the terminal, if the network device can determine that there are many collisions on the time frequency resource corresponding to the one or more transmission configurations, it is determined that one or more transmission configurations is skipped in the first data transmission process.

Optionally, the third information includes one of the following:
fourth indication information is used to indicate that the transmission configuration closest to first time in the transmission configurations used for the first data transmission needs to be skipped. Optionally, the fourth indication information may be 1-bit information. Optionally, the first time is the current time;
an index of the skipped transmission configuration.

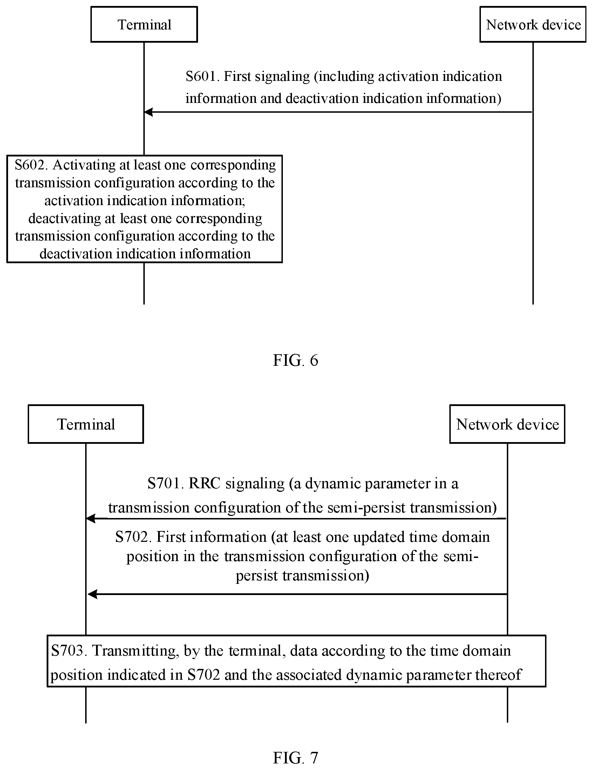

Refer to FIG. 6, which is a schematic flowchart of another communication method provided by an embodiment of the present disclosure. As shown in the figure, the process may include the following steps:
S601: sending, by a network device, a first signaling to a terminal.

Optionally, the first signaling is DCI. Optionally, the DCI includes activation indication information and deactivation indication information, where the activation indication information is used to indicate the activation of at least one transmission configuration of semi-persist transmission, and the deactivation indication information is used to indicate the deactivation of at least one transmission configuration of semi-persist transmission.

Optionally, the transmission configuration includes a CG configuration or a SPS configuration.

Optionally, the network device can determine the transmission configuration that needs to be activated and/or deactivated according to the data reception situation, so that the collision of data transmission (especially a big data transmission) in multiple transmission configurations can be reduced. At the same time, one DCI carrying an activation indication and a deactivation indication can activate or deactivate multiple transmission configurations more quickly, or activate or deactivate multiple dynamic parameters in transmission configurations, thus reducing the occurrence.

Optionally, the DCI is a semi-persist transmission activation signaling or a semi-persist transmission deactivation signaling.

Optionally, the first signaling (such as the activation signaling) may include at least one of the following:
at least one identifier of deactivation semi-persist transmission;
at least one identifier of activation semi-persist transmission;
at least one identifier of activation semi-persist transmission and deactivation semi-persist transmission (at this time, the identifier of activation semi-persist transmission and deactivation semi-persist transmission is the same);
a configuration of activation semi-persist transmission (the configuration is the same as mentioned above, including, for example, time frequency resource, MCS, RV version, transmission period, etc.).

Optionally, the activation signaling may include a dynamic signaling. The dynamic signaling may be DCI scrambled based on a configured scheduling radio network temporary identifier (Configured Scheduling Radio Network Temporary Identifier, CS-RNTI) or DCI scrambled based on a cell-radio network temporary identifier (Cell-Radio Network Temporary Identifier, C-RNTI).

Optionally, a bit field of the DCI indicates at least one of the above activation signalings.

Further, the above process can also include the following steps:
S602: performing, by the terminal, semi-persist data transmission according to the first signaling.

In this step, the terminal can activate at least one corresponding transmission configuration according to the activation indication information, and deactivate at least one corresponding transmission configuration according to the deactivation indication information.

In S602, the activating a transmission configuration includes that the terminal adopts at least one transmission configuration activated by the activation indication information for the first data transmission; the deactivating a transmission configuration includes that discarding at least one transmission configuration indicated by the deactivation indication information for data transmission.

For example, at the same time domain position, according to the received activation indication information, the terminal performs data transmission at a same time domain position according to the time domain position of indicated at least one activated semi-persist scheduling semi-persist transmission, and stops sending data or monitoring data transmission at the corresponding time domain position according to the received deactivation indication information.

It can be seen from the above process that adopting activation signaling or deactivation signaling to activate and deactivate transmission configurations at the same time can reduce the collision that occur when transmitting data based on multiple transmission configurations or multiple dynamic parameters in a transmission configuration (especially the big data transmission), so that multiple transmission configurations of the semi-persist transmission or multiple dynamic parameters in the semi-persist transmission configuration can be activated and deactivated faster, thus reducing conflicting semi-persist transmission. For the XR service, the above-mentioned process of the present disclosure can adapt to dynamic variable characteristics of the data packet size and packet arrival time of the XR, and can save signaling overhead.

The above-mentioned embodiments of the present disclosure will be described in detail with several examples below.

Example 1: this example is an example of the process shown in FIG. 5.

Refer to FIG. 7, which is a schematic flowchart of Example 1 in the embodiment of the present disclosure, and the process may include the following steps:
S701: configuring, by a base station, transmission configuration (CG/SPS configuration) of semi-persist transmission and a dynamic parameter in the transmission configuration of semi-persist transmission for a terminal through a RRC signaling.

The base station configures a plurality of transmission configurations of semi-persist transmission, and the semi-persist transmission includes downlink SPS transmission and/or uplink CG transmission. The transmission configuration of semi-persist transmission includes the CG configuration and/or the SPS configuration. The transmission configuration of semi-persist transmission includes all configuration parameters required for transmission.

For a transmission configuration (such as the GP configuration or the SPS configuration), the dynamic parameter of semi-persist transmission therein may include at least one of the following: an identifier of modulation code scheme table, MCS, a transmission frequency, a RV version number, a period, a set index of a power control parameter (PO) and an alpha parameter, a time frequency resource configuration, a frequency hopping identifier, a new data indication (New Data Indication) index, a time offset of time domain starting position, transmission duration, and so on.

The modulation code scheme table includes at least one parameter of a MCS table index number, a MCS index number, a modulation order, a data transmission rate, a coding rate. MCS refers to a modulation and coding mode, which may include a MCS index (index) and an offset value of MCS relative to a reference value. The reference value includes at least one of the following: a reference MCS value, MCS value for a reference point. The reference point may include a time domain position, a frequency domain position and a semi-persist transmission configuration. Different modulation code scheme tables include different combinations of at least one parameter. The transmission frequency indicates the total number of data transmissions in the period. The RV version number indicates the number of the redundancy version of the transmission block of the data transmission, including 0, 1, 2, 3. The period indicates that the terminal can perform configured grant within the time range. The set index of the power control parameter PO and the alpha parameter is a unique index of the combination of a group of a road loss compensation parameter PO and an adjustment factor alpha.

For a dynamic parameter in a transmission configuration of semi-persist transmission, the dynamic parameter is associated with an attribute of the data packet to be transmitted. Different dynamic parameters are associated with different data packet attributes. The different data packet attributes include at least one of the following: a data packet size and a quality of service (Quality of Service, QoS) requirement of the data packet. The QoS requirement of the data packet includes at least one of a transmission rate, reliability, and latency. For example, if the data packet meets a first threshold, it can be configured as a semi-persist first dynamic parameter group; if the data packet meets a second threshold, it can be configured as a semi-persist second dynamic parameter group; if the data packet meets a third threshold, it can be configured as a semi-persist third dynamic parameter group.

S702: sending, by the base station, first information to the terminal. The first information includes at least one time domain position in a transmission configuration of semi-persist transmission. For the description of the first information, please refer to the previous embodiments.

Optionally, the base station can configure the time domain position of semi-persist transmission for the terminal through the first information, such as including at least one of the following: a starting time domain position of semi-persist transmission, a time offset relative to the starting time domain position, transmission duration, a semi-persist transmission period, etc. where, the time domain position of the semi-persist transmission may include at least one time domain position, such as including at least one of the following: at least one starting time domain position of the semi-persist transmission, at least one offset relative to the starting time domain position, at least one transmission duration and at least one semi-persist transmission period. Optionally, the time domain position of the semi-persist transmission configured by the base station may be based on the following parameters of a time unit: a symbol, a slot, a subframe, and a wireless frame.

The dynamic parameter of the semi-persist transmission configured by the base station may include at least one group of dynamic parameters. Different dynamic parameter groups contain at least one different dynamic parameter. Different dynamic parameters of the semi-persist transmission are associated with different time domain resource positions of the semi-persist transmission, that is, different positions of semi-persist transmission resources, thus implementing implicitly indicating different dynamic parameters of the semi-persist transmission.

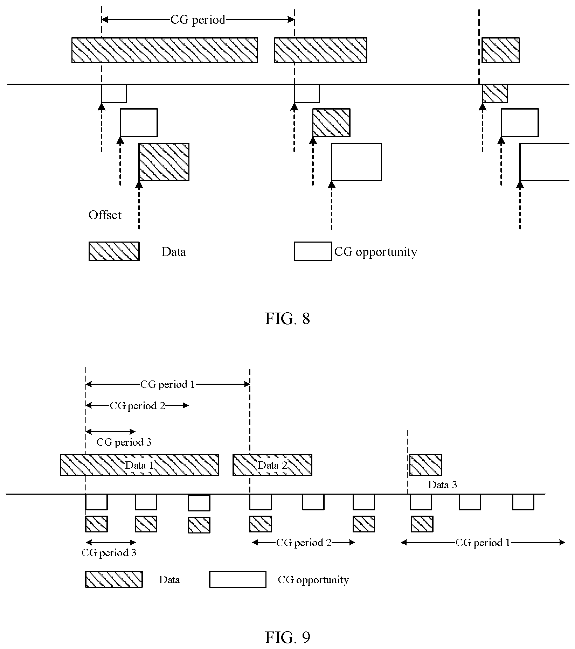

Taking the CG configuration as an example, as shown in FIG. 8, the offsets of the starting positions of multiple slots can be configured in a CG configuration, so that multiple transmission starting positions are configured at the time domain position of each CG occasion. Different starting positions are associated with different dynamic parameters of the CG configuration. For example, an offse1 is associated with a dynamic parameter 1, an offset2 is associated with a dynamic parameter 2, and an offset3 is associated with a dynamic parameter 3.

Taking the CG configuration as an example, as shown in FIG. 9, multiple time domain periods can be configured in a CG configuration, so that multiple transmission starting positions are configured within the transmission duration of each CG occasion. Different transmission periods are associated with different dynamic parameters of the CG configuration. For example, a period 1 is associated with a dynamic parameter 1, a period 2 is associated with a dynamic parameter 2, and a period 3 is associated with a dynamic parameter 3.

Optionally, the base station can configure the time domain position of the semi-persist transmission in the following ways, such as including dynamic configuration, which includes sending DCI.

Optionally, for the terminal, there may be multiple activation semi-persist transmission configurations at the same time.

S703: transmitting, by the terminal, data according to the time domain position indicated in S702 and the associated dynamic parameter thereof.

Optionally, the terminal determines a time domain position according to the different time domain positions indicated in S702, and determines a dynamic parameter of the semi-persist transmission associated with the time domain position to form a group of dynamic parameters, and transmits data according to the group of dynamic parameters.

Optionally, the transmitting data may include:
in the downlink direction, the terminal receives the PDSCH at the time domain position configured by the base station in S702; for example, the terminal may, at different time domain positions, monitor the demodulation reference signal (Demodulation Reference Signal, DMRS), or monitor the PDSCH, to receive the PDSCH. The terminal demodulates and decodes the data according to the received PDSCH and the dynamic parameter associated with the time domain position.
in the uplink direction, the terminal sends the PUSCH at the determined time domain position in a group of CG dynamic parameters. specifically, the terminal sends the PUSCH at the time domain position associated with the dynamic parameter according to the association relationship between the threshold configuration of the acquired data packet and the CG dynamic parameter.

Example 2: this example is an example of the process shown in FIG. 5.

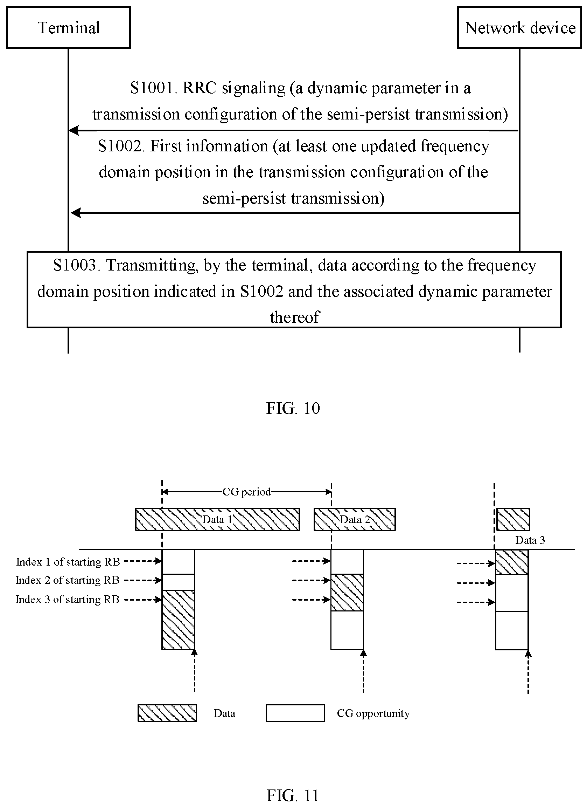

Referring to FIG. 10, which is a schematic flowchart of Example 2 in the embodiment of the present disclosure, which may include the following steps:
S1001: configuring, by a base station, a transmission configuration (the CG/SPS configuration) of the semi-persist transmission and a dynamic parameter in the transmission configuration of the semi-persist transmission to a terminal through a RRC signaling; for a specific implementation, please refer to the related description in Example 1;
S1002: sending, by the base station, first information to the terminal; the first information includes at least one frequency domain position in the transmission configuration of the semi-persist transmission.

Optionally, the base station can configure a frequency domain position of the semi-persist transmission for the terminal through the first information, such as including at least one of the following: a starting frequency domain position of the semi-persist transmission, a frequency offset relative to the starting frequency domain position, and a frequency domain resource occupied by the transmission. The starting frequency domain position of the semi-persist transmission includes at least one frequency domain position, such as including at least one of the following: at least one starting frequency domain position of the semi-persist transmission, at least one frequency offset relative to the starting frequency domain position, and at least one frequency domain resource occupied by the transmission. Optionally, the frequency domain position of the semi-persist transmission is configured by the base station, which may be based on the following parameters of a frequency unit: RE, RB, RBG, BWP, CC.

The dynamic parameter of the semi-persist transmission configured by the base station may include at least one group of dynamic parameters. Different dynamic parameter groups contain at least one different dynamic parameter. Different dynamic parameters of the semi-persist transmission are associated with different frequency domain resource positions of the semi-persist transmission, that is, different positions of the semi-persist transmission resource, thus implementing implicitly indicating different dynamic parameters of the semi-persist transmission.

Taking the CP configuration as an example, as shown in FIG. 11, multiple offsets of the frequency domain starting position can be configured in a CG configuration, so that multiple transmission starting frequency domain positions are configured at the frequency domain position of each CG occasion. Different frequency domain starting positions are associated with different dynamic parameters of the CG configuration. For example, a starting RB index1 is associated with a dynamic parameter 1, a starting RB index2 is associated with a dynamic parameter 2, and a starting RB index3 is associated with a dynamic parameter 3.

Optionally, the base station can configure the frequency domain position of the semi-persist transmission by the following ways, such as including a dynamic configuration, which includes sending DCI.

Optionally, for the terminal, there may be multiple activation semi-persist transmission configurations at the same time.

S1003: transmitting, by the terminal, data according to the frequency domain position indicated in S1002 and the associated dynamic parameter thereof.

Optionally, the terminal determines a frequency domain position according to different frequency domain positions indicated in S1002, and determines a dynamic parameter of the semi-persist transmission associated with the frequency domain position to form a group of dynamic parameters, and performs data transmission according to the group of dynamic parameters.

Optionally, the data transmission may include:
in the downlink direction, the terminal receives the PDSCH at the frequency domain position configured by the base station in S1002. For example, the terminal may, at different frequency domain positions, monitor the DMRS or monitor the PDSCH, thereby receiving the PDSCH; the terminal demodulates and decodes the data according to the received PDSCH and the dynamic parameter associated with the frequency domain position.
in the uplink direction, the terminal sends the PUSCH at the determined frequency domain position in a group of the CG dynamic parameter. Specifically, the terminal sends the PUSCH at the frequency domain position associated with the dynamic parameter and at the transmission time position of the CG configuration according to the association relationship between the threshold configuration of the acquired data packet and the CG dynamic parameter.

Example 3: this example is an example of the process shown in FIG. 5.

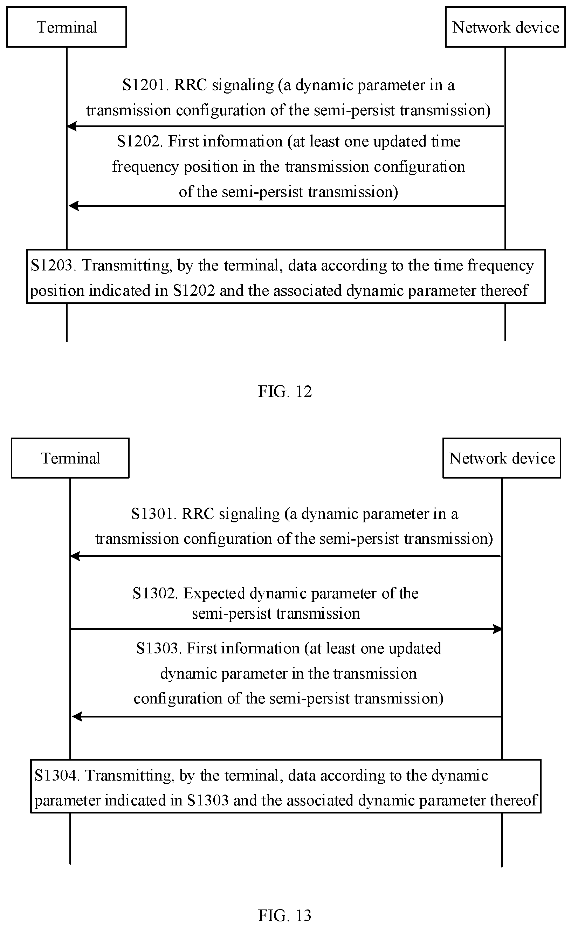

Referring to FIG. 12, which is a schematic flowchart of Example 3 in the embodiment of the present disclosure, which may include the following steps:
S1201: configuring, by a base station, a transmission configuration (CG/SPS configuration) of the semi-persist transmission and a dynamic parameter in the transmission configuration of the semi-persist transmission to a terminal through a RRC signaling; for specific implementation, please refer to the related description in Example 1.
S1202: sending, by the base station, first information to the terminal; the first information includes at least one time frequency position in the transmission configuration of the semi-persist transmission.

Optionally, the base station can configure the time frequency position of the semi-persist transmission for the terminal through the first information, such as including at least one of the following: a starting frequency domain position of the semi-persist transmission, a time offset relative to the starting frequency domain position, a frequency domain resource occupied by the transmission, a starting time domain position of the semi-persist transmission, a time offset relative to the starting time domain position, transmission duration, and a semi-persist transmission period.

The time frequency position of the semi-persist transmission can include at least one time domain position and frequency domain position, such as including at least one of the following: at least one starting time domain position of the semi-persist transmission, at least one time offset relative to the starting time domain position, at least one transmission duration, at least one semi-persist transmission period, at least one starting frequency domain position of the semi-persist transmission, at least one frequency offset relative to the starting frequency domain position, and at least one frequency domain resource occupied by the transmission.

Optionally, the frequency domain position of the semi-persist transmission is configured by the base station, which may be based on the following parameters of the frequency unit: RE, RB, RBG, BWP, CC.

Optionally, the time domain position of the semi-persist transmission configured by the base station may be based on the following parameters of the time unit: a symbol, a slot, a subframe, and a wireless frame.

The dynamic parameter of the semi-persist transmission configured by the base station may include at least one group of dynamic parameters. Different dynamic parameter groups contain at least one different dynamic parameter. Different dynamic parameters of the semi-persist transmission are associated with different time frequency resource positions of the semi-persist transmission, that is, different positions of the semi-persist transmission resource, thus implementing implicitly indicating different dynamic parameters of the semi-persist transmission.

Optionally, the base station can configure the time frequency position of the semi-persist transmission by the following ways, such as including the dynamic configuration, which includes sending DCI.

Optionally, for the terminal, there may be multiple activation semi-persist transmission configurations at the same time.

S1203: transmitting, by the terminal, data according to the time frequency position indicated in S1202 and the associated dynamic parameter thereof.

Optionally, the terminal determines a time frequency position according to the different time frequency position indicated in S1202, and determines the dynamic parameter of the semi-persist transmission associated with the frequency domain position to form a group of dynamic parameters, and performs data transmission according to the group of dynamic parameters.

Optionally, the data transmission may include:
in the downlink direction, the terminal receives the PDSCH at the time frequency position configured by the base station in S1002. For example, the terminal may, at different frequency domain positions and time domain positions, monitor the DMRS, or monitor the PDSCH, thereby receiving the PDSCH. The terminal demodulates and decodes the data according to the received PDSCH and the dynamic parameter associated with the frequency domain position and time domain position.
in the uplink direction, the terminal sends the PUSCH at the determined time frequency position in a group of CG dynamic parameters. Specifically, the terminal sends the PUSCH at the time frequency position associated with the dynamic parameter according to the association relationship between the threshold configuration of the acquired data packet and the CG dynamic parameter.

Example 4: this example is an example of the process shown in FIG. 5.

Referring to FIG. 13, which is a schematic flowchart of Example 4 in the embodiment of the present disclosure, which may include the following steps:
S1301: configuring, by the base station, a transmission configuration (the CG/SPS configuration) of the semi-persist transmission and a dynamic parameter in the transmission configuration of the semi-persist transmission to a terminal through a RRC signaling; for a specific implementation, please refer to the related descriptions in Examples 1, 2 or 3.
S1302: reporting, by the terminal, the dynamic parameter of the semi-persist transmission.

Optionally, the dynamic parameter of the semi-persist transmission reported by the terminal are the dynamic parameter expected by the terminal.

Taking a time frequency resource position as an example, optionally, the terminal can determine its expected dynamic parameter of the semi-persist transmission according to the data packet size to be transmitted, the channel transmission conditions, etc. For example, the time frequency resource position of the semi-persist transmission can be acquired in the following ways:
mode 1: according to the reciprocity between the uplink channel and the downlink channel, a state of the uplink channel is acquired through the downlink reference signal, thereby estimating the MCS;
mode 2: the uplink MCS parameter is acquired through the MCS parameter of the PDSCH scheduled by downlink DCI.

Optionally, the terminal can report the expected dynamic parameter of the semi-persist transmission through an uplink signal. For example, the reported dynamic parameter can include at least one of the following: one or more dynamic parameters of the semi-persist transmission (the one or more dynamic parameters can be configured by the base station through a RRC signaling or determined by the terminal), a time domain and/or frequency domain resource position of the semi-persist transmission, the association relationship of the above one or more dynamic parameters and the time domain and/or frequency domain resource positions of the semi-persist transmission, and a dynamic parameter associated with time domain and/or frequency domain of the semi-continuous transmission.

Optionally, the uplink signal may include at least one of the following: a SR signal, a WUS signal, a preamble signal of RACH, an SRS signal, a PUSCH signal and a PUCCH signal.

S1303: sending, by the base station, first information to the terminal. The first information includes at least one dynamic parameter in the transmission configuration of the semi-persist transmission. The dynamic parameter may be one or more of the dynamic parameters reported by the terminal in S1302.

Optionally, the base station can select one or more dynamic parameters from the dynamic parameters reported by the terminal according to the channel state etc., and send the one or more dynamic parameters to the terminal through the first information. Optionally, for a certain dynamic parameter of the one or more dynamic parameters, the base station may also send an indication of whether to adopt this dynamic parameter and/or whether this dynamic parameter causes a conflict.

For other related descriptions, please refer to the relevant steps in FIG. 7.

S1304: transmitting, by the terminal, data according to the dynamic parameter indicated in S1303 and the associated dynamic parameter thereof. For specific implementation, please refer to the relevant steps in Example 1, 2 or 3.

Example 5: this example is an example of the process shown in FIG. 5.

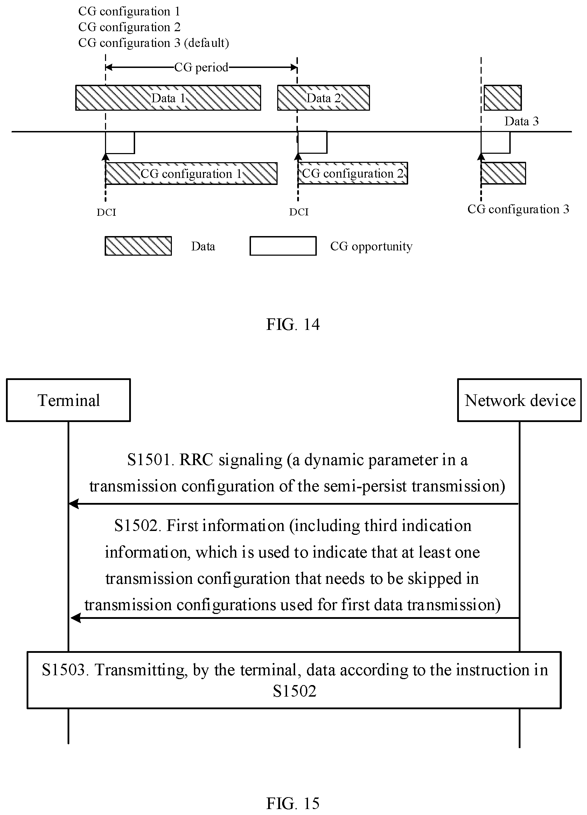

The process of Example 5 is basically the same as that of Example 1, Example 2 or Example 3. FIG. 14 illustrates a schematic diagram of dynamic parameter configuration adopting Example 5. As shown in the figure, a base station is configured with a first CG configuration, which contains at least one dynamic parameter; for example, a CG-1 dynamic configuration parameter 1, a CG-1 dynamic configuration parameter 2 and a CG-1 dynamic configuration parameter 3.

Optionally, dynamic DCI (including the first information) sent by the base station to the terminal can be scrambled by CS-RNTI.

At a first transmission position of the CG transmission, the base station sends the dynamic DCI to instruct the terminal to adopt the CG-1 dynamic configuration parameter 1 for data transmission at this transmission position; at a second transmission position of the CG transmission, the base station sends the dynamic DCI to instruct the terminal to adopt the CG-1 dynamic configuration parameter 2 for data transmission at this transmission position; at a third transmission position of the CG transmission, the base station sends the dynamic DCI to instruct the terminal to adopt the CG-1 dynamic configuration parameter 3 for data transmission at this transmission position.

Example 6: this example is an example of the process shown in FIG. 5.

Referring to FIG. 15, which is a schematic flowchart of Example 6 in the embodiment of the present disclosure, which may include the following steps:
S1501: configuring, by a base station, a transmission configuration (the CG/SPS configuration) of the semi-persist transmission and a dynamic parameter in the transmission configuration of the semi-persist transmission to a terminal through a RRC signaling; for a specific implementation, please refer to the related descriptions in Examples 1, 2 or 3.
S1502: sending, by the base station, first information to the terminal. The first information includes third indication information configured to indicate that at least one transmission configuration needed to be skipped of the transmission configurations (including the CG transmission configuration and/or the SPS transmission configuration) applied to first data transmission.

Optionally, the base station can indicate whether to skip the current semi-persist transmission at the current semi-persist transmission position through the sent DCI.

Optionally, the first information can include at least one of the following information:
1-bit indication information, used to indicate whether to skip the semi-persist transmission configuration at the current semi-persist transmission position;
multi-bits indication information, used to indicate an index (index) of the semi-persist transmission configuration at the current semi-persist transmission position that needs to be skipped;
multi-bits indication information, used to indicate one or more dynamic parameters (i.e., one or more of the above first transmission configuration parameters) at the time position of the current semi-persist transmission.

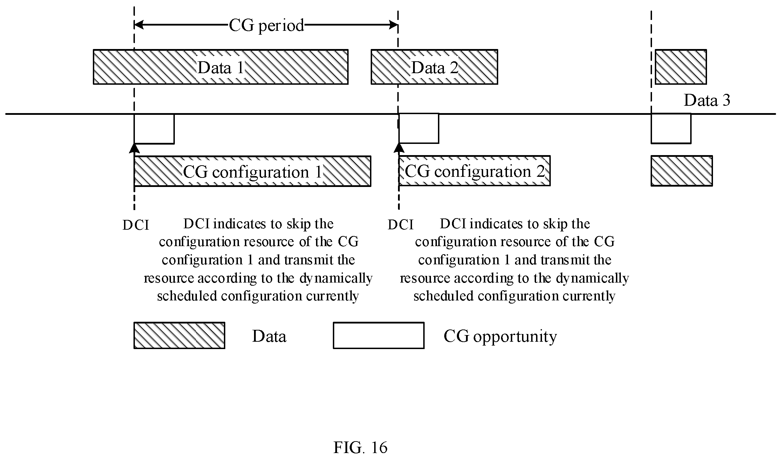

Taking the CG configuration as an example, as shown in FIG. 16, the base station is configured with first CG configuration 1, and the first CG configuration 1 includes at least one transmission position. The base station sends DCI to instruct to skip adopting a dynamic parameter of the CG configuration 1 for the data transmission at the first transmission position, to skip adopting a dynamic parameter of the CG configuration 1 for the data transmission at the second transmission position, and to adopt a dynamic parameter of CG configuration 1 for the data transmission at the third transmission position.

S1503: transmitting, by the terminal, data according to the instruction in S1502.

Optionally, if the terminal receives the third indication information in S1502, and the third indication information is used to indicate to skip a closest semi-persist transmission configuration at the current semi-persist transmission position, the terminal transmits, according to the indication, the data based on the dynamic parameter configured by RRC at the time domain position corresponding to the closest semi-persist transmission configuration at the current semi-persist transmission position. If the terminal receives the third indication information in S1502, and the third indication information is used to indicate not to skip the closest semi-persist transmission configuration at the current semi-persist transmission position, or if the terminal does not receive the third information, the terminal transmits data according to the dynamic parameter indicated in S1502.

Optionally, if the terminal receives the third indication information in S1502, and the third indication information is used to indicate to skip one or more semi-persist transmission configurations at the current semi-persist transmission position, the terminal transmits, according to the indication, the data at this semi-persist transmission position based on the dynamic parameter configured by the RRC. If the terminal receives the third indication information in S1502, and the third indication information is used to indicate not to skip one or more semi-persist transmission configurations at the current semi-persist transmission position, or the terminal does not receive the third information, the terminal transmits the data according to the dynamic parameter indicated in S1502.

According to one or more of the above embodiments or a combination of different embodiments, it can be solved that in the XR service characteristics, dynamically indicating the dynamic parameters (that is, the transmission configuration parameter of the semi-persist transmission) through implicit or explicit modes, so that the dynamic parameter can be matched with the data packet size and packet arrival time of the XR, and then the flexible requirements of the XR service for latency, reliability and a data transmission rate can be met.

Based on the same technical concept, an embodiment of the present disclosure also provides a terminal. The terminal can implement the functions of the terminal side in the above embodiments.

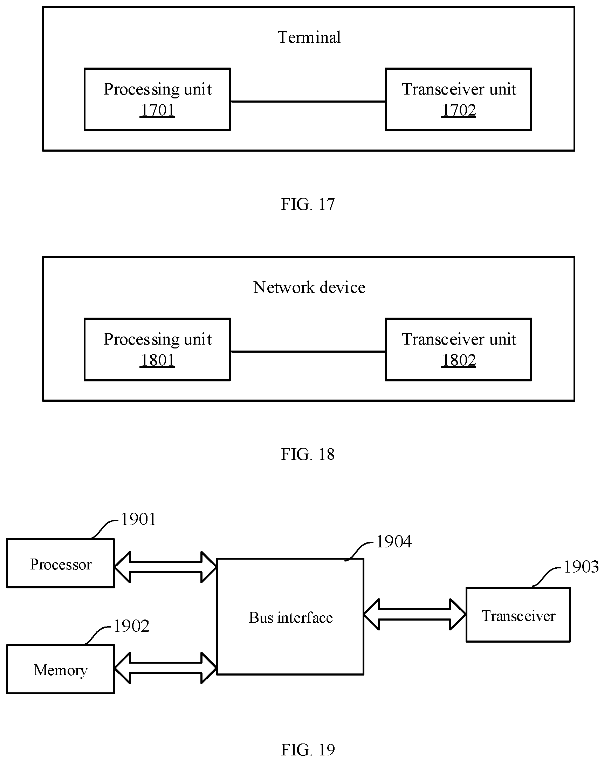

FIG. 17 exemplarily shows a terminal provided by an embodiment of the present disclosure, and the terminal may include a processing unit 1701 and a transceiver unit 1702.

In an implementation, the transceiver unit 1702 is configured to receive first information sent by a network device, where the first information includes N first transmission configuration parameters, and the N is an integer greater than or equal to 1. Each of the N first transmission configuration parameters is associated with at least one second transmission configuration parameter, and the first transmission configuration parameter and the second transmission configuration parameter are CG configuration parameters or SPS configuration parameters. The processing unit 1701 is configured to perform first data transmission according to at least one of the N first transmission configuration parameters and a second transmission configuration parameter associated with the at least one first transmission configuration parameter.

In an implementation, an association relationship of each of the N first transmission configuration parameters and the second transmission configuration parameter is pre-configured or predefined.

In an implementation, the first information includes a first transmission configuration parameter, which is one of M first transmission configuration parameters reported to the network device by the transceiver unit 1702, where the M is an integer greater than or equal to the N;
before the transceiver unit 1702 receives the first information sent by the network device, the transceiver unit 1702 is further configured to:
sending the M first transmission configuration parameters and at least one second transmission configuration parameter associated with each of the M first transmission configuration parameters to the network device.

In an implementation, the first transmission configuration parameter is time domain resource information, or frequency domain resource information, or time frequency resource information. The time frequency resource information includes time domain resource information and frequency domain resource information.

In an implementation, the at least one second transmission configuration parameter includes at least one of the following: a modulation code scheme MCS, a redundancy version, a sending power parameter, time domain resource information, frequency domain resource information, time frequency resource information. The time frequency resource information includes time domain resource information and frequency domain resource information.

In an implementation, the time domain resource information includes at least one of the following:
a starting time domain position of the first data transmission;
a time offset relative to the starting time domain position;
a transmission time length of the first data transmission;
a transmission period.

In an implementation, the time domain resource information is time domain resource information based on at least one of the following: a symbol, a slot, a subframe, and a wireless frame.

In an implementation, the frequency domain resource information includes at least one of the following:
a starting frequency domain position of the first data transmission;
a frequency offset relative to the starting frequency domain position;
frequency domain resource occupied by the first data transmission.

In an implementation, the frequency domain resource information is frequency domain resource information based on at least one of the following: a resource unit RE, a resource block RB, a resource block group RBG, partial bandwidths BWP, and a component carrier CC.

In an implementation, the first transmission configuration parameter is a first CG configuration parameter and the second transmission configuration parameter is a second CG configuration parameter;
the processing unit 1701 is specifically configured to select a target CG configuration parameter from the N first CG configuration parameters;
the second CG configuration parameter associated with the target CG configuration parameter is acquired according to the target CG configuration parameter;
data is sent to the network device according to the target CG configuration parameter and the second CG configuration parameter associated with the target CG configuration parameter.

In an implementation, after the first data transmission, the processing unit 1701 is further configured to receive second information sent by the network device, and the second information includes at least one of the following:
first indication information is used to indicate whether the first CG configuration parameter and the second CG configuration parameter associated with the first CG configuration parameter that being used for the first data transmission are available or unavailable;
second indication information is used to indicate whether each of the N first CG configuration parameters and the second CG transmission configuration parameter associated with each of the N first CG configuration parameters that being used for the first data transmission are available or unavailable;
third indication information is used to indicate one or more CG configurations that need to be deleted or skipped in CG configurations used for the first data transmission.

In an implementation, the first transmission configuration parameter is a first SPS configuration parameter and the second transmission configuration parameter is a second SPS configuration parameter;
the processing unit 1701 is specifically configured to receive the data sent by the network device according to the N first SPS configuration parameters and a second SPS configuration parameter associated with each of the N first SPS configuration parameters.

In an implementation, the first information further includes third information, which is used to indicate that at least one transmission configuration that needs to be skipped in transmission configurations used for the first data transmission, and the transmission configuration includes a CG configuration or a SPS configuration;
the processing unit 1701 is configured to perform the first data transmission without adopting the at least one transmission configuration that needs to be skipped, or without adopting the transmission configuration parameter in the at least one transmission configuration that needs to be skipped during the first data transmission.

In an implementation, the third information includes:
fourth indication information is used to indicate that the transmission configuration closest to first time in the transmission configurations used for the first data transmission needs to be skipped; or
an index of the transmission configuration that needs to be skipped.

In an implementation, the transceiver unit 1702 is specifically configured to:
receive downlink control indication DCI sent by the network device on a physical downlink control channel PDCCH, where the DCI includes the first information; or
receive the first information sent by the network device on a physical downlink shared channel PDSCH; or
receive a downlink reference signal sent by the network device, where the downlink reference signal carries the first information.

In another possible implementation, the transceiver unit 1702 is configured to receive a first signaling sent by the network device, where the first signaling includes activation indication information and deactivation indication information. The activation indication information is used to indicate the activation of at least one transmission configuration of semi-persist transmission, and the deactivation indication information is used to indicate the deactivation of at least one transmission configuration of semi-persist transmission.

In an implementation, the processing unit 1701 is further configured to perform semi-persist data transmission according to the first signaling.

In an implementation, the first signaling includes at least one of the following:
at least one identifier of deactivation semi-persist transmission;
at least one identifier of activation semi-persist transmission;
at least one identifier of activation semi-persist transmission and deactivation semi-persist transmission;
a transmission configuration parameter of activation semi-persist transmission.

In an implementation, the first signaling is DCI scrambled based on a configured scheduling radio network temporary identifier CS-RNTI or DCI scrambled based on a cell-radio network temporary identifier.

In an implementation, the first signaling is downlink control indication DCI, and the DCI is an activation signaling or a deactivation signaling.

In an implementation, the transmission configuration of the semi-persist transmission includes a configured grant CG configuration or a semi-persist scheduling SPS configuration.

It should be noted here that the terminal provided by the embodiment of the present disclosure can implement all the method steps implemented by the terminal in the above method embodiments, and can achieve the same technical effect, and the same parts and beneficial effects in this embodiment as in the method embodiments are not detailed here.

Based on the same technical concept, an embodiment of the present disclosure also provides a network device (such as a base station). The network device can implement the functions of the network device side in the above embodiments.

FIG. 18 exemplarily shows a network device provided by an embodiment of the present disclosure, which may include a processing unit 1801 and a transceiver unit 1802.

In an implementation, the transceiver unit 1802 is configured to send first information to a terminal, where the first information includes N first transmission configuration parameters, and the N is an integer greater than or equal to 1. Each of the N first transmission configuration parameters is associated with at least one second transmission configuration parameter, and the first transmission configuration parameter and the second transmission configuration parameter are CG configuration parameters or SPS configuration parameters. At least one of the N first transmission configuration parameters and a second transmission configuration parameter associated with the at least one first transmission configuration parameter are used for first data transmission.

In an implementation, an association relationship between each of the N first transmission configuration parameters and the second transmission configuration parameter is pre-configured or pre-defined.

In an implementation, the first information includes a first transmission configuration parameter, and the first transmission configuration parameter is one of M first transmission configuration parameters reported to the network device by the transceiver unit 1802, where the M is an integer greater than or equal to the N;
before the transceiver unit 1802 sends the first information to the terminal, the transceiver unit 1802 is further configured to:
receive the M first transmission configuration parameters and at least one second transmission configuration parameter associated with each of the M first transmission configuration parameters that being sent by the terminal.

In an implementation, the first transmission configuration parameter is time domain resource information, or frequency domain resource information, or time frequency resource information. The time frequency resource information includes time domain resource information and frequency domain resource information.

In an implementation, the at least one second transmission configuration parameter includes at least one of the following: modulation code scheme MCS, a redundancy version, a sending power parameter, time domain resource information, frequency domain resource information, time frequency resource information. The time frequency resource information includes time domain resource information and frequency domain resource information.

In an implementation, the time domain resource information includes at least one of the following:
a starting time domain position of the first data transmission;
a time offset relative to the starting time domain position;
a transmission time length of the first data transmission;
a transmission period.

In an implementation, the time domain resource information is time domain resource information based on at least one of the following: a symbol, a slot, a subframe, and a wireless frame.

In an implementation, the frequency domain resource information includes at least one of the following:
a starting frequency domain position of the first data transmission;
a frequency offset relative to the starting frequency domain position;
frequency domain resource occupied by the first data transmission.

In an implementation, the frequency domain resource information is frequency domain resource information based on at least one of the following: a resource unit RE, a resource block RB, a resource block group RBG, partial bandwidth BWP, and a component carrier CC.

In an implementation, the first transmission configuration parameter is a first CG configuration parameter and the second transmission configuration parameter is a second CG configuration parameter;
the transceiver unit 1802 is further configured to receive the data sent by the terminal according to N first CG configuration parameters and a second CG configuration parameter associated with each the first CG configuration parameter, respectively.

In an implementation, after the transceiver unit 1802 receives the data sent by the terminal, the transceiver unit 1802 is further configured to:
send second information to the terminal, where the second information includes at least one of the following:
first indication information is used to indicate whether the first CG configuration parameter and the second CG configuration parameter associated with the first CG configuration parameter that being used for the first data transmission are available or unavailable;
second indication information is used to indicate whether each of the N first CG configuration parameters and the second CG transmission configuration parameter associated with each of the N first CG configuration parameters that being used for the first data transmission are available or unavailable;
third indication information is used to indicate one or more CG configurations that need to be deleted or skipped in CG configurations used for the first data transmission.

In an implementation, the first transmission configuration parameter is a first SPS configuration parameter and the second transmission configuration parameter is a second SPS configuration parameter;
the transceiver unit 1802 is further configured to send data to the terminal according to the N first SPS configuration parameters and the second SPS configuration parameter associated with each the first SPS configuration parameters.

In an implementation, the first information further includes third information, which is used to indicate that at least one transmission configuration that needs to be skipped in transmission configurations used for the first data transmission, and the transmission configuration includes a CG configuration or a SPS configuration.

In an implementation, the third information includes:
fourth indication information is used to indicate that the transmission configuration closest to first time in the transmission configurations used for the first data transmission which is closest to first time needs to be skipped; or
an index of the transmission configuration that needs to be skipped.

In an implementation, the transceiver unit is specifically configured to:
send downlink control indication DCI to the terminal on a physical downlink control channel PDCCH, where the DCI includes the first information; or
send the first information to the terminal on a physical downlink shared channel PDSCH; or
send a downlink reference signal to the terminal, where the downlink reference signal carries the first information.

In another possible implementation, the transceiver unit 1802 is configured to send a first signaling to the terminal, where the first signaling includes activation indication information and deactivation indication information. The activation indication information is used to indicate the activation of at least one transmission configuration of semi-persist transmission, and the deactivation indication information is used to indicate the deactivation of at least one transmission configuration of semi-persist transmission.

In an implementation, the first signaling is downlink control indication DCI, and the DCI is an activation signaling or a deactivation signaling.

In an implementation, the first signaling includes at least one of the following:
at least one identifier of deactivation semi-persist transmission;
at least one identifier of activation semi-persist transmission;
at least one identifier of activation semi-persist transmission and deactivation semi-persist transmission;
a transmission configuration parameter of activation semi-persist transmission.

In an implementation, the first signaling is DCI scrambled based on a configured scheduling radio network temporary identifier CS-RNTI or DCI scrambled based on a cell-radio network temporary identifier C-RNTI.

In an implementation, the transmission configuration of the semi-persist transmission includes a configured grant CG configuration or a semi-persist scheduling SPS configuration.

It should be noted here that the above-mentioned network device provided by the embodiment of the present disclosure can implement all the method steps implemented by the network device in the above method embodiments, and can achieve the same technical effect, and the same parts and beneficial effects in this embodiment as in the method embodiments are not detailed here.

Based on the same technical concept, an embodiment of the present disclosure also provides a communication apparatus, which can implement the functions of the corresponding device in the forementioned embodiments.

FIG. 19 exemplarily shows a schematic structural diagram of a communication apparatus in an embodiment of the present disclosure. As shown in the figure, the communication apparatus may include a processor 1901, a memory 1902, a transceiver 1903 and a bus interface 1904.

The processor 1901 is configured to manage a bus architecture and general processing, and the memory 1902 can store the data used by the processor 1901 when performing operations. The transceiver 1903 is configured to receive and send data under the control of the processor 1901.

The bus architecture can include any number of interconnected buses and bridges, specifically, various circuits of one or more processors indicated by the processor 1901 and memories indicated by the memory 1902 are linked together. The bus architecture can also link various other circuits, such as a peripheral device, a voltage regulator and a power management circuit and the like together, which are well known in the art, so they will not be further described here. The bus interface provides an interface. The processor 1901 is configured to manage a bus architecture and general processing, and the memory 1902 can store the data used by the processor 1901 when performing operations.

The process disclosed in an embodiment of the present disclosure can be applied to or implemented by the processor 1901. In the implementation, each step of a signal processing process can be completed by a hardware integrated logic circuit or a software instruction in the processor 1901. The processor 1901 may be a general processor, a digital signal processor, an application specific integrated circuit, a field programmable gate array or other programmable logic equipment, a discrete gate or transistor logic device, and a discrete hardware component, and may implement or execute the methods, steps and logic block diagrams disclosed in an embodiment of the present disclosure. The general processor can be a microprocessor or any conventional processor, etc. The steps of the methods disclosed in combination with the embodiment of the present disclosure can be directly embodied as the completion of execution by a hardware processor, or the completion of execution by a combination of hardware and software modules in the processor. A software module can be in a random-access memory, a flash memory, a read-only memory, a programmable read-only memory or an electrically erasable programmable memory, a register and other mature storage medium in the art. The storage medium is in the memory 1902, and the processor 1901 reads the information in the memory 1902 and completes the steps of the signal processing process in combination with its hardware.

Specifically, the processor 1901 is configured to read a computer instruction in the memory 1902 and execute the reception of the first information sent by the network device, where the first information includes N first transmission configuration parameters, and the N is an integer greater than or equal to 1. Each of the N first transmission configuration parameters is associated with at least one second transmission configuration parameter, and the first transmission configuration parameter and the second transmission configuration parameter are configured grant CG configuration parameters or semi-persist scheduling SPS configuration parameters. First data transmission is performed according to at least one of the N first transmission configuration parameters and a second transmission configuration parameter associated with the at least one first transmission configuration parameter.

Optionally, an association relationship between each of the N first transmission configuration parameters and the second transmission configuration parameter is pre-configured or predefined.

Optionally, the first information includes a first transmission configuration parameter, which is one of M first transmission configuration parameters reported by the terminal to the network device, and the M is an integer greater than or equal to the N;
before the processor 1901 executes the reception of the first information sent by a network device, the processor 1901 is further configured to execute:
sending the M first transmission configuration parameters and at least one second transmission configuration parameter associated with each of the M first transmission configuration parameters to the network device.

Optionally, the first transmission configuration parameter is time domain resource information, or frequency domain resource information, or time frequency resource information. The time frequency resource information includes time domain resource information and frequency domain resource information.

Optionally, the at least one second transmission configuration parameter includes at least one of the following: a modulation code scheme MCS, a redundancy version, a sending power parameter, time domain resource information, frequency domain resource information, time frequency resource information. The time frequency resource information includes time domain resource information and frequency domain resource information.

Optionally, the time domain resource information includes at least one of the following:
a starting time domain position of the first data transmission;
a time offset relative to the starting time domain position;
a transmission time length of the first data transmission;
a transmission period.

Optionally, the time domain resource information is time domain resource information based on at least one of the following: a symbol, a slot, a subframe, and a wireless frame.

Optionally, the frequency domain resource information includes at least one of the following:
a starting frequency domain position of the first data transmission;
a frequency offset relative to the starting frequency domain position;
frequency domain resource occupied by the first data transmission.

Optionally, the frequency domain resource information is frequency domain resource information based on at least one of the following: a resource unit RE, a resource block RB, a resource block group RBG, partial bandwidth BWP, and a component carrier CC.

Optionally, the first transmission configuration parameter is a first CG configuration parameter and the second transmission configuration parameter is a second CG configuration parameter;
the processor 1901 is specifically configured to execute selecting a target CG configuration parameter from the N first CG configuration parameters;
acquiring a second CG configuration parameter associated with the target CG configuration parameter according to the target CG configuration parameter;
sending data to the network device according to the target CG configuration parameter and the second CG configuration parameter associated with the target CG configuration parameter.

Optionally, after the first data transmission, the processor 1901 is further configured to execute the reception of second information sent by the network device, and the second information includes at least one of the following:
first indication information is used to indicate whether the first CG configuration parameter and the second CG configuration parameter associated with the first CG configuration parameter that being used for the first data transmission are available or unavailable;
second indication information is used to indicate whether each of the N first CG configuration parameters and the second CG transmission configuration parameter associated with each of the N first CG configuration parameters that being used for the first data transmission are available or unavailable;
third indication information is used to indicate one or more CG configurations which need to be deleted or skipped in CG configurations used for the first data transmission.

Optionally, the first transmission configuration parameter is a first SPS configuration parameter and the second transmission configuration parameter is a second SPS configuration parameter;
the processor 1901 is specifically configured to execute the reception of the data sent by the network device according to the N first SPS configuration parameters and a second SPS configuration parameter associated with each of the N first SPS configuration parameters.

Optionally, the first information further includes third information, which is used to indicate that at least one transmission configuration that needs to be skipped in transmission configurations used for the first data transmission, and the transmission configuration includes a CG configuration or a SPS configuration;
the processor 1901 is specifically configured to perform the first data transmission without adopting the at least one transmission configuration that needs to be skipped, or without adopting the transmission configuration parameter in the at least one transmission configuration that needs to be skipped during the first data transmission.

Optionally, the third information includes:
fourth indication information is used to indicate that the transmission configuration closest to first time in the transmission configurations configured for the first data transmission needs to be skipped; or
an index of the transmission configuration that needs to be skipped.

Optionally, the processor 1901 is specifically configured to execute the reception of downlink control indication DCI sent by the network device on a physical downlink control channel PDCCH, where the DCI includes the first information; or
receive the first information sent by the network device on a physical downlink shared channel PDSCH; or
receive a downlink reference signal sent by the network device, where the downlink reference signal carries the first information.

Optionally, the processor 1901 is configured to execute the reception of a first signaling sent by the network device, where the first signaling includes activation indication information and deactivation indication information. The activation indication information is used to indicate the activation of at least one transmission configuration of semi-persist transmission, and the deactivation indication information is used to indicate the deactivation of at least one transmission configuration of semi-persist transmission.

Optionally, the processor 1901 is further configured to execute semi-persist data transmission according to the first signaling.

Optionally, the first signaling includes at least one of the following:
at least one identifier of deactivation semi-persist transmission;
at least one identifier of activation semi-persist transmission;
at least one identifier of activation semi-persist transmission and deactivation semi-persist transmission;
a transmission configuration parameter of activation semi-persist transmission.

Optionally, the first signaling is DCI scrambled based on a configured scheduling radio network temporary identifier CS-RNTI or DCI scrambled based on a cell-radio network temporary identifier C-RNTI.

Optionally, the first signaling is downlink control indication DCI, and the DCI is an activation signaling or a deactivation signaling.

Optionally, the transmission configuration of the semi-persist transmission includes a configured grant CG configuration or a semi-persist scheduling SPS configuration.

Optionally, the processor 1901 is further configured to execute sending first information to the terminal, where the first information includes N first transmission configuration parameters, where the N is an integer greater than or equal to 1. Each of the N first transmission configuration parameters is associated with at least one second transmission configuration parameter, and the first transmission configuration parameter and the second transmission configuration parameter are configured grant CG configuration parameters or semi-persist scheduling SPS configuration parameters;
at least one of the N first transmission configuration parameters and a second transmission configuration parameter associated with the at least one first transmission configuration parameter are used for first data transmission.

Optionally, an association relationship between each of the N first transmission configuration parameters and the second transmission configuration parameter is pre-configured or pre-defined.

Optionally, the first information includes a first transmission configuration parameter, which is one of M first transmission configuration parameters reported by the terminal to the network device, and the M is an integer greater than or equal to the N;
before the processor 1901 sends the first information to the terminal, the processor 1901 is further configured to execute:
receiving the M first transmission configuration parameters and at least one second transmission configuration parameter associated with each of the M first transmission configuration parameters that being sent by the terminal.

Optionally, the first transmission configuration parameter is time domain resource information, or frequency domain resource information, or time frequency resource information. The time frequency resource information includes time domain resource information and frequency domain resource information.

Optionally, the at least one second transmission configuration parameter includes at least one of the following: a modulation code scheme MCS, a redundancy version, a sending power parameter, time domain resource information, frequency domain resource information, time frequency resource information. The time frequency resource information includes time domain resource information and frequency domain resource information.

Optionally, the time domain resource information includes at least one of the following:
a starting time domain position of the first data transmission;
a time offset relative to the starting time domain position;
a transmission time length of the first data transmission;
a transmission period.

Optionally, the time domain resource information is time domain resource information based on at least one of the following: a symbol, a slot, a subframe, and a wireless frame.

Optionally, the frequency domain resource information includes at least one of the following:
a starting frequency domain position of the first data transmission;
a frequency offset relative to the starting frequency domain position;
frequency domain resource occupied by the first data transmission.

Optionally, the frequency domain resource information is frequency domain resource information based on at least one of the following: a resource unit RE, a resource block RB, a resource block group RBG, partial bandwidths BWP, and a component carrier CC.

Optionally, the first transmission configuration parameter is a first CG configuration parameter and the second transmission configuration parameter is a second CG configuration parameter;
the processor 1901 is further configured to execute the reception of the data sent by the terminal according to N first CG configuration parameters and a second CG configuration parameter associated with each the first CG configuration parameter, respectively.

Optionally, after the processor 1901 receives the data sent by the terminal, the processor 1901 is further configured to execute:
sending second information to the terminal, where the second information includes at least one of the following:
first indication information is used to indicate whether the first CG configuration parameter and the second CG configuration parameter associated with the first CG configuration parameter that being used for the first data transmission are available or unavailable;
second indication information is used to indicate whether each of the N first CG configuration parameters and the second CG transmission configuration parameter associated with each of the N first CG configuration parameters that being used for the first data transmission are available or unavailable;
third indication information is used to indicate one or more CG configurations that need to be deleted or skipped in CG configurations used for the first data transmission.

Optionally, the first transmission configuration parameter is a first SPS configuration parameter and the second transmission configuration parameter is a second SPS configuration parameter;
the processor 1901 is further configured to execute sending data to the terminal according to the N first SPS configuration parameters and a second SPS configuration parameter associated with each the first SPS configuration parameter.

Optionally, the first information further includes third information, which is used to indicate that at least one transmission configuration that needs to be skipped in transmission configurations used for the first data transmission, and the transmission configuration includes a CG configuration or a SPS configuration.

Optionally, the third information includes:
fourth indication information is used to indicate that the transmission configuration closest to first time in the transmission configurations used for the first data transmission needs to be skipped; or
an index of the transmission configuration that needs to be skipped.

Optionally, the processor 1901 is specifically configured to execute sending downlink control indication DCI to the terminal on a physical downlink control channel PDCCH, where the DCI includes the first information; or
sending the first information to the terminal on a physical downlink shared channel PDSCH; or
sending a downlink reference signal to the terminal, where the downlink reference signal carries the first information.

Optionally, the processor 1901 is configured to execute sending a first signaling to the terminal, where the first signaling includes activation indication information and deactivation indication information. The activation indication information is used to indicate the activation of at least one transmission configuration of semi-persist transmission, and the deactivation indication information is used to indicate the deactivation of at least one transmission configuration of semi-persist transmission.

Optionally, the first signaling is downlink control indication DCI, and the DCI is an activation signaling or a deactivation signaling.

Optionally, the first signaling includes at least one of the following:
at least one identifier of deactivation semi-persist transmission;
at least one identifier of activation semi-persist transmission;
at least one identifier of activation semi-persist transmission and deactivation semi-persist transmission;
a transmission configuration parameter of activation semi-persist transmission.

Optionally, the first signaling is DCI scrambled based on a configured scheduling radio network temporary identifier CS-RNTI or DCI scrambled based on a cell-radio network temporary identifier C-RNTI.

Optionally, the transmission configuration of the semi-persist transmission includes a configured grant CG configuration or a semi-persist scheduling SPS configuration.

It should be noted here that the communication apparatus provided by the embodiment of the present disclosure can implement all the method steps in the above method embodiments, and can achieve the same technical effect, and the same parts and beneficial effects in this embodiment as in the method embodiments are not detailed here.

An embodiment of the present disclosure also provides a computer-readable storage medium, in which a computer-executable instruction is stored, and the computer-executable instruction is used to make a computer execute the method executed by the corresponding device in the above embodiments.

It should be understood by those skilled in the art that embodiments of the present disclosure may be provided as a method, a system, or a computer program product. Therefore, the present disclosure can take the form of an entirely hardware embodiment, an entirely software embodiment, or an embodiment combining software and hardware aspects. Furthermore, the present disclosure may take the form of a computer program product embodied on one or more computer usable storage media (including but is not limited to disk storage, CD-ROM, optical storage, etc.) in which a computer usable program code is embodied.

The present disclosure is described with reference to a flowchart and/or a block diagram of a method, a device (system), and a computer program product according to the present disclosure. It should be understood that each process and/or block in the flowchart and/or block diagram, and a combination of the process and/or block in the flowchart and/or block diagram can be implemented by a computer program instruction. The computer program instruction may be provided to a processor of a general-purpose computer, a special-purpose computer, an embedded processor, or other programmable data processing devices to produce a machine, such that the instruction which are executed by the processor of the computer or other programmable data processing devices produce an apparatus for implementing the function specified in a process or processes of the flowchart and/or a block or blocks in the block diagram.

These computer program instructions may also be stored in a computer-readable memory that can direct a computer or other programmable data processing devices to work in a particular manner, such that the instruction stored in the computer-readable memory produces an article of manufacture including an instruction apparatus that implement the function specified in a process or processes of the flowchart and/or a block or blocks in the block diagram.

These computer program instructions may also be loaded onto a computer or other programmable data processing devices, such that a series of operational steps are executed on the computer or other programmable apparatuses to produce a computer-implemented process, such that the instructions executed on the computer or other programmable apparatus provide steps for implementing the function specified in a process or processes of the flowchart and/or a block or blocks in the block diagram.

For the convenience of explanation, the present disclosure has been described above in conjunction with specific implementations. However, the above exemplary discussion is not intended to be exhaustive or to limit the implementations to the specific forms disclosed above. Many modifications and variations can be obtained according to the above teachings. The selection and description of the above-mentioned implementations are to better explain the contents of the present disclosure, so that those skilled in the art can better use the embodiment.

## Claims

1. A communication method, comprising:
receiving, by a terminal, first information sent by a network device, wherein the first information comprises N first transmission configuration parameters, and the N is an integer greater than or equal to 1; wherein each of the N first transmission configuration parameters is associated with at least one second transmission configuration parameter, and the first transmission configuration parameter and the second transmission configuration parameter are configured grant CG configuration parameters or semi-persist scheduling SPS configuration parameters; and
performing, by the terminal, first data transmission according to at least one of the N first transmission configuration parameters and a second transmission configuration parameter associated with the at least one first transmission configuration parameter.

2. The method according to claim 1, wherein an association relationship between each of the N first transmission configuration parameters and the second transmission configuration parameter is pre-configured or predefined.

3. The method according to claim 1, wherein the first information comprises a first transmission configuration parameter, which is one of M first transmission configuration parameters reported by the terminal to the network device, and the M is an integer greater than or equal to the N;
before the receiving, by a terminal, the first information sent by the network device, the method further comprises:
sending, by the terminal, the M first transmission configuration parameters and at least one second transmission configuration parameter associated with each of the M first transmission configuration parameters to the network device.

4. The method according to claim 1, wherein the first transmission configuration parameter is time domain resource information, or frequency domain resource information, or time frequency resource information; wherein the time frequency resource information comprises time domain resource information and frequency domain resource information.

5. The method according to claim 1, wherein the at least one second transmission configuration parameter comprises at least one of the following: a modulation code scheme MCS, a redundancy version, a sending power parameter, time domain resource information, frequency domain resource information, time frequency resource information; wherein the time frequency resource information comprises time domain resource information and frequency domain resource information.

6. The method according to claim 4 or 5, wherein the time domain resource information comprises at least one of the following:
a starting time domain position of the first data transmission;
a time offset relative to the starting time domain position;
a transmission time length of the first data transmission;
a transmission period.

7. The method according to claim 6, wherein the time domain resource information is time domain resource information based on at least one of the following: a symbol, a slot, a subframe, and a wireless frame.

8. The method according to claim 4 or 5, wherein the frequency domain resource information comprises at least one of the following:
a starting frequency domain position of the first data transmission;
a frequency offset relative to the starting frequency domain position;
frequency domain resource occupied by the first data transmission.

9. The method according to claim 8, wherein the frequency domain resource information is frequency domain resource information based on at least one of the following: a resource unit RE, a resource block RB, a resource block group RBG, partial bandwidths BWP, and a component carrier CC.

10. The method according to any one of claims 1-9, wherein the first transmission configuration parameter is a first CG configuration parameter and the second transmission configuration parameter is a second CG configuration parameter;
the performing, by the terminal, the first data transmission according to at least one of the N first transmission configuration parameters and the second transmission configuration parameter associated with the at least one first transmission configuration parameter comprises:
selecting, by the terminal, a target CG configuration parameter from the N first CG configuration parameters;
acquiring, by the terminal, a second CG configuration parameter associated with the target CG configuration parameter according to the target CG configuration parameter; and
sending, by the terminal, data to the network device according to the target CG configuration parameter and the second CG configuration parameter associated with the target CG configuration parameter.

11. The method according to claim 10, wherein after the first data transmission, the method further comprises:
receiving, by the terminal, second information sent by the network device, wherein the second information comprises at least one of the following:
first indication information is used to indicate whether the first CG configuration parameter and the second CG configuration parameter associated with the first CG configuration parameter that being used for the first data transmission are available or unavailable;
second indication information is used to indicate whether each of the N first CG configuration parameters and the second CG transmission configuration parameter associated with each of the N first CG configuration parameters that being used for the first data transmission are available or unavailable;
third indication information is used to indicate one or more CG configurations that need to be deleted or skipped in CG configurations used for the first data transmission.

12. The method according to claim 1, wherein the first transmission configuration parameter is a first SPS configuration parameter and the second transmission configuration parameter is a second SPS configuration parameter;
the performing, by the terminal, the first data transmission according to at least one of the N first transmission configuration parameters and the second transmission configuration parameter associated with the at least one first transmission configuration parameter comprises:
receiving, by the terminal, data sent by the network device according to the N first SPS configuration parameters and a second SPS configuration parameter associated with each of the N first SPS configuration parameters.

13. The method according to any one of claims 1-12, wherein the first information further comprises third information, which is used to indicate that at least one transmission configuration that needs to be skipped in transmission configurations used for the first data transmission, and the transmission configuration comprises a CG configuration or a SPS configuration;
the method further comprises:
performing, by the terminal, the first data transmission without adopting the at least one transmission configuration that needs to be skipped, or without adopting the transmission configuration parameter in the at least one transmission configuration that needs to be skipped during the first data transmission.

14. The method according to claim 13, wherein the third information comprises:
fourth indication information is used to indicate that the transmission configuration closest to first time in the transmission configurations used for the first data transmission needs to be skipped; or
an index of the transmission configuration that needs to be skipped.

15. The method according to any one of claims 1-14, wherein the receiving, by the terminal, first information sent by a network device comprises:
receiving, by the terminal, downlink control indication DCI sent by the network device on a physical downlink control channel PDCCH, wherein the DCI comprises the first information; or
receiving, by the terminal, the first information sent by the network device on a physical downlink shared channel PDSCH; or
receiving, by the terminal, a downlink reference signal sent by the network device, wherein the downlink reference signal carries the first information.

16. A communication method, comprising:
receiving, by a terminal, a first signaling sent by a network device, wherein the first signaling comprises activation indication information and deactivation indication information, wherein the activation indication information is used to indicate the activation of at least one transmission configuration of semi-persist transmission, and the deactivation indication information is used to indicate the deactivation of at least one transmission configuration of semi-persist transmission.

17. The method according to claim 16, further comprising:
performing, by the terminal, semi-persist data transmission according to the first signaling.

18. The method according to claim 16 or 17, wherein the first signaling comprises at least one of the following:
at least one identifier of deactivation semi-persist transmission;
at least one identifier of activation semi-persist transmission;
at least one identifier of activation semi-persist transmission and deactivation semi-persist transmission;
a transmission configuration parameter of activation semi-persist transmission.

19. The method according to any one of claims 16-18, wherein the first signaling is DCI scrambled based on a configured scheduling radio network temporary identifier CS-RNTI or DCI scrambled based on a cell-radio network temporary identifier C-RNTI.

20. The method according to any one of claims 16-19, wherein the first signaling is downlink control indication DCI, and the DCI is an activation signaling or a deactivation signaling.

21. The method according to any one of claims 16-19, wherein the transmission configuration of the semi-persist transmission comprises a configured grant CG configuration or a semi-persist scheduling SPS configuration.

22. A communication method, comprising:
sending, by a network device, first information to a terminal, wherein the first information comprises N first transmission configuration parameters, and the N is an integer greater than or equal to 1; wherein each of the N first transmission configuration parameters is associated with at least one second transmission configuration parameter, and the first transmission configuration parameter and the second transmission configuration parameter are configured grant CG configuration parameters or semi-persist scheduling SPS configuration parameters;
wherein at least one of the N first transmission configuration parameters and a second transmission configuration parameter associated with the at least one first transmission configuration parameter are used for first data transmission.

23. The method according to claim 22, wherein an association relationship between each of the N first transmission configuration parameters and the second transmission configuration parameter is pre-configured or pre-defined.

24. The method according to claim 22, wherein the first information comprises a first transmission configuration parameter, which is one of M first transmission configuration parameters reported by the terminal to the network device, and the M is an integer greater than or equal to the N;
before the sending, by the network device, the first information to the terminal, the method further comprises:
receiving, by the network device, the M first transmission configuration parameters and at least one second transmission configuration parameter associated with each of the M first transmission configuration parameters that being sent by the terminal.

25. The method according to claim 22, wherein the first transmission configuration parameter is time domain resource information, or frequency domain resource information, or time frequency resource information; wherein the time frequency resource information comprises time domain resource information and frequency domain resource information.

26. The method according to claim 22, wherein the at least one second transmission configuration parameter comprises at least one of the following: a modulation code scheme MCS, a redundancy version, a sending power parameter, time domain resource information, frequency domain resource information, time frequency resource information, wherein the time frequency resource information comprises time domain resource information and frequency domain resource information.

27. The method according to claim 25 or 26, wherein the time domain resource information comprises at least one of the following:
a starting time domain position of the first data transmission;
a time offset relative to the starting time domain position;
a transmission time length of the first data transmission;
a transmission period.

28. The method according to claim 27, wherein the time domain resource information is time domain resource information based on at least one of the following: a symbol, a slot, a subframe, and a wireless frame.

29. The method according to claim 25 or 26, wherein the frequency domain resource information comprises at least one of the following:
a starting frequency domain position of the first data transmission;
a frequency offset relative to the starting frequency domain position;
frequency domain resource occupied by the first data transmission.

30. The method according to claim 29, wherein the frequency domain resource information is frequency domain resource information based on at least one of the following: a resource unit RE, a resource block RB, a resource block group RBG, partial bandwidth BWP, and a component carrier CC.

31. The method according to any one of claims 22-30, wherein the first transmission configuration parameter is a first CG configuration parameter and the second transmission configuration parameter is a second CG configuration parameter;
the method further comprises:
receiving, by the network device, the data sent by the terminal according to N first CG configuration parameters and a second CG configuration parameter associated with each the first CG configuration parameter, respectively.

32. The method according to claim 31, wherein after the receiving, by the network device, the data sent by the terminal, the method further comprises:
sending, by the network device, second information to the terminal, wherein the second information comprises at least one of the following:
first indication information is used to indicate whether the first CG configuration parameter and the second CG configuration parameter associated with the first CG configuration parameter that being used for the first data transmission are available or unavailable;
second indication information is used to indicate whether each of the N first CG configuration parameters and the second CG transmission configuration parameter associated with each of the N first CG configuration parameters that being used for the first data transmission are available or unavailable;
third indication information is used to indicate one or more CG configurations that need to be deleted or skipped in CG configurations used for the first data transmission.

33. The method according to claim 22, wherein the first transmission configuration parameter is a first SPS configuration parameter and the second transmission configuration parameter is a second SPS configuration parameter;
the method further comprises:
sending, by the network device, data to the terminal according to the N first SPS configuration parameters and a second SPS configuration parameter associated with each the first SPS configuration parameter.

34. The method according to any one of claims 22-33, wherein the first information further comprises third information, which is used to indicate that at least one transmission configuration that needs to be skipped in transmission configurations used for the first data transmission, and the transmission configuration comprises a CG configuration or a SPS configuration.

35. The method according to claim 34, wherein the third information comprises:
fourth indication information is used to indicate that the transmission configuration closest to first time in the transmission configurations used for the first data transmission needs to be skipped; or
an index of the transmission configuration that needs to be skipped.

36. The method according to any one of claims 22-35, wherein the sending, by a network device, first information to a terminal comprises:
sending, by the network device, downlink control indication DCI to the terminal on a physical downlink control channel PDCCH, wherein the DCI comprises the first information; or
sending, by the network device, the first information to the terminal on a physical downlink shared channel PDSCH; or
sending, by the network device, a downlink reference signal to the terminal, wherein the downlink reference signal carries the first information.

37. A communication method, comprising:
sending, by a network device, a first signaling to a terminal, wherein the first signaling comprises activation indication information and deactivation indication information, wherein the activation indication information is used to indicate the activation of at least one transmission configuration of semi-persist transmission, and the deactivation indication information is used to indicate the deactivation of at least one transmission configuration of semi-persist transmission.

38. The method according to claim 37, wherein the first signaling is downlink control indication DCI, and the DCI is an activation signaling or a deactivation signaling.

39. The method according to claim 37 or 38, wherein the first signaling comprises at least one of the following:
at least one identifier of deactivation semi-persist transmission;
at least one identifier of activation semi-persist transmission;
at least one identifier of activation semi-persist transmission and deactivation semi-persist transmission;
a transmission configuration parameter of activation semi-persist transmission.

40. The method according to any one of claims 37-39, wherein the first signaling is DCI scrambled based on a configured scheduling radio network temporary identifier CS-RNTI or DCI scrambled based on a cell-radio network temporary identifier C-RNTI.

41. The method according to any one of claims 37-40, wherein the transmission configuration of the semi-persist transmission comprises a configured grant CG configuration or a semi-persist scheduling SPS configuration.

42. A terminal, comprising a processing unit and a transceiver unit, wherein
the transceiver unit is configured to receive first information sent by a network device, wherein the first information comprises N first transmission configuration parameters, and the N is an integer greater than or equal to 1; wherein each of the N first transmission configuration parameters is associated with at least one second transmission configuration parameter, and the first transmission configuration parameter and the second transmission configuration parameter are configured grant CG configuration parameters or semi-persist scheduling SPS configuration parameters; and
the processing unit is configured to perform first data transmission according to at least one of the N first transmission configuration parameters and a second transmission configuration parameter associated with the at least one first transmission configuration parameter.

43. A terminal, comprising a processing unit and a transceiver unit, wherein
the transceiver unit is configured to receive a first signaling sent by a network device, wherein the first signaling comprises activation indication information and deactivation indication information, wherein the activation indication information is used to indicate the activation of at least one transmission configuration of semi-persist transmission, and the deactivation indication information is used to indicate the deactivation of at least one transmission configuration of semi-persist transmission.

44. A network device, comprising a processing unit and a transceiver unit, wherein
the transceiver unit is configured to send first information to a terminal, wherein the first information comprises N first transmission configuration parameters, and the N is an integer greater than or equal to 1; wherein each of the N first transmission configuration parameters is associated with at least one second transmission configuration parameter, and the first transmission configuration parameter and the second transmission configuration parameter are configured grant CG configuration parameters or semi-persist scheduling SPS configuration parameters;
wherein at least one of the N first transmission configuration parameters and a second transmission configuration parameter associated with the at least one first transmission configuration parameter are used for first data transmission.

45. A network device, comprising a processing unit and a transceiver unit, wherein
the transceiver unit is configured to send a first signaling to a terminal, wherein the first signaling comprises activation indication information and deactivation indication information, wherein the activation indication information is used to indicate the activation of at least one transmission configuration of semi-persist transmission, and the deactivation indication information is used to indicate the deactivation of at least one transmission configuration of semi-persist transmission.

46. A communication apparatus, comprising: a processor, a memory, and a transceiver, wherein
the transceiver receives and sends data under the control of the processor;
the memory stores a computer instruction;
the processor is configured to read the computer instruction, execute the method according to any one of claims 1 to 15, or execute the method according to any one of claims 16 to 21.

47. A communication apparatus, comprising: a processor, a memory, and a transceiver, wherein
the transceiver receives and sends data under the control of the processor;
the memory stores a computer instruction;
the processor is configured to read the computer instruction, execute the method according to any one of claims 22-36, or the method according to any one of claims 37-41.

48. A computer-readable storage medium, wherein a computer-executable instruction is stored in the computer-readable storage medium, and the computer-executable instruction is used to cause the computer to execute the method according to any one of claims 1 to 15, or the method according to any one of claims 16 to 21, or the method according to any one of claims 22 to 36, or the method according to claims 37 to 41.

49. A computer program product, wherein when called by a computer, the computer program product causes the computer to execute the method according to any one of claims 1 to 15, or the method according to any one of claims 16 to 21, or the method according to any one of claims 22 to 36, or the method according to any one of claims 37 to 41.
